# NEUE EUROPÄISCHE PATENTSCHRIFT

(11) **EP 0 772 647 B2**
(45) Veröffentlichungstag und Bekanntmachung des Hinweises auf die Entscheidung über den Einspruch: **25.04.2007**
(45) Hinweis auf die Patenterteilung: 03.12.2003
(21) Anmeldenummer: 95926869.9
(22) Anmeldetag: 13.07.1995
(51) Int. Cl.: C08K 5/524, C09D 133/06

(54) **POLYACRYLATHARZLÖSUNGEN MIT VERBESSERTER FARBZAHL UND VERWENDUNG IN ÜBERZUGSMITTELN**
POLYACRYLATE RESIN SOLUTIONS WITH IMPROVED COLOUR INDEX AND THEIR USE IN COATINGS
SOLUTIONS DE RESINES POLYACRYLATE A INDICE DE COULEUR AMELIORE ET LEUR UTILISATION DANS UN REVETEMENT

(30) Priorität: 25.07.1994 DE 4426323
(43) Veröffentlichungstag der Anmeldung: 14.05.1997
(73) Patentinhaber: BASF Coatings Aktiengesellschaft, 48165 Münster (DE)
(72) Erfinder: BRÜNNEMANN, Michael, D-48167 Münster (DE); RINK, Heinz, Peter, D-48153 Münster (DE); HOFFMANN, Peter, D-48308 Senden (DE); BORGHOLTE, Harald, D-48151 Münster (DE); JUNG, Werner-Alfons, D-59387 Ascheberg (DE)
(86) Internationale Anmeldenummer: PCT/EP1995/002740
(87) Internationale Veröffentlichungsnummer: WO 1996/003458

(56) Entgegenhaltungen:
- EP-A- 0 389 292
- DE-A- 1 494 375
- DE-A- 2 749 576
- DE-A- 3 422 688
- DE-A- 4 133 420
- DE-U- 9 301 866
- CHEMICAL ABSTRACTS, vol. 77, no. 18, 30.Oktober 1972 Columbus, Ohio, US; abstract no. 116167, 'polyamide compositions with uniformly dispersed pigments' & JP,A,47 001 711 (TORAY INDS., INC.) 18.Januar 1972
- JP 93-202335 (Translation in English)

## Beschreibung

Gegenstand der vorliegenden Erfindung ist ein Verfahren zur Herstellung eines organisches Lösungsmittel enthaltenden Überzugsmittels auf der Basis von Vernetzungsmitteln und einer Lösung eines Polyacrylatharzes (A) in mindestens einem organischen Lösemittel mit einem Gehalt an mindestens einem organischen Phosphit.

Die vorliegende Erfindung betrifft außerdem den Einsatz der Überzugsmittel in Verfahren zur Herstellung eines mehrschichtigen, schützenden und/oder dekorativen Überzuges auf einer Substratoberfläche.

Mehrschichtige Überzüge, insbesondere zweischichtige Metalliclackierungen, werden vor allem nach dem basecoat/clear-coat-Verfahren hergestellt. Dieses Verfahren ist bekannt und beispielsweise in der US-A-3,639,147 und der EP-A-38 127 beschrieben.

Mit dem base-coat/clear-coat-Verfahren sind Lackierungen herstellbar, die sich im Vergleich zu einschichtigen Decklackierungen durch eine verbesserte Effektgebung und durch die Möglichkeit, Lackierungen mit leuchtenderen und reineren Farbtönen herzustellen, auszeichnen.

Der vorlackierte Basislack bestimmt, je nach Art, Menge und räumlicher Orientierung der eingesetzten Pigmente, den Farbton und ggf. den Effekt (z.B. Metalleffekt oder Perlglanzeffekt) der Lackierung.

Nach Aufbringen des Basislackes wird dem aufgebrachten Basislackfilm in einer Abdunstphase wenigstens ein Teil der organischen Lösemittel bzw. wenigstens ein Teil des Wassers entzogen. Auf diese vorgetrocknete Basislackschicht wird dann ein nichtwäßriger, transparenter Decklack aufgebracht (Naß-in-Naß-Verfahren). Anschließend werden dann Basislackschicht und Decklackschicht zusammen getrocknet.

Der aufgebrachte transparente Decklack verleiht der Zweischichtlackierung Glanz und Fülle und schützt die aufgebrachte pigmentierte Lackschicht vor chemischen und physikalischen Angriffen.

Wichtige Eigenschaften, die die nach dem Trocknungsprozeß erhaltene transparente Decklackschicht aufweisen muß, sind eine gute Haftung auf der Basislackschicht, einen guten optischen Effekt, eine hohe Transparenz, ein sehr guter Decklackstand, ein guter Glanz und gute mechanische Eigenschaften, wie Härte, Kratzfestigkeit und Elastizität. Nicht zuletzt muß die nach dem Trocknungsprozeß erhaltene transparente Decklackschicht eine hohe Widerstandsfähigkeit gegen klimatische Einflüsse (z.B. Temperaturschwankungen, Feuchtigkeit in Form von Wasserdampf, Regen, Tau, Belastung durch Strahlung usw.) und gegen Angriffe durch Säuren oder andere Chemikalien, wie z.B. organische Lösemittel, aufwe i sen .

Insbesondere müssen die als Decklack eingesetzten Überzugsmittel aber aus optischen Gründen eine möglichst geringe Eigenfarbe (möglichst niedrige Farbzahl) aufweisen, damit beispielsweise Farbtonveränderungen bei hellen Perleffektbasislacken und Metallicbasislacken vermieden werden.

Die Herstellung von Überzugsmitteln mit möglichst niedriger Farbzahl ist möglich, wenn bei allen Komponenten vergilbende Bestandteile sorgfältig ausgeschlossen werden. So weisen die derzeit üblicherweise für die Herstellung von transparenten Decklacken eingesetzten Polyacrylatharzlösungen zwar schon eine relativ niedrige Farbzahl auf, jedoch ist eine weitere Verbesserung durchaus wünschenswert.

So sind beispielsweise aus der DE-A-38 23 005, der DE-A-35 34 874, der DE-A-39 18 669 und der DE-A-40 24 204 Überzugsmittel auf der Basis von Polyacrylatharzlösungen bekannt.

Ferner sind aus der nicht vorveröffentlichten deutschen Patentanmeldung P 44 07 409.3 Überzugsmittel bekannt, die als Bindemittel eine Lösung eines hydroxylgruppenhaltigen Polyacrylatharzes enthalten, das hergestellt worden ist unter Verwendung von 4-Hydroxy-n-butyl(meth)acrylat und/oder 3-Hydroxy-n-butyl(meth)acrylat als Monomerkomponente.

Schließlich sind aus der nicht vorveröffentlichten deutschen Patentanmeldung P 44 07 415.8 Überzugsmittel bekannt, die als Bindemittel eine Lösung eines hydroxylgruppenhaltigen Polyacrylatharzes enthalten, das hergestellt worden ist unter Verwendung von cycloaliphatischen Estern der (Meth)acrylsäure und hydroxylgruppenhaltigen Monomeren, die so ausgewählt sind, daß bei alleiniger Polymerisation der OH-Monomeren ein Poly(meth)acrylatharz mit einer Glasübergangstemperatur von -10 bis 6 °C oder von 60 bis 80 °C erhalten wird.

Bei all diesen genannten Überzugsmitteln ist aber eine weitere Verbesserung der Farbzahl durchaus wünschenswert. Dabei muß allerdings gewährleistet sein, daß die übrigen Eigenschaften der überzugsmittel nicht verschlechtert werden.

Aus der EP-A-389 292 sind wäßrige Überzugsmittel auf Basis einer wäßrigen Dispersion eines carboxylgruppenhaltigen Acrylatcopolymerisates bekannt, die ein Trialkylphosphit enthalten.

Ferner sind aus der DE-C-3 422 668 Überzugsmittel bekannt, die Ester der phosphorigen Säure als Antivergilbungsmittel enthalten.

Darüber hinaus ist es beispielsweise aus der DE-A-41 33 420 bekannt, bei der Herstellung der von Polyacrylatharzen zusammen mit den Monomeren geringe Mengen Triisodecylphosphit zuzusetzen. Aber auch bei den so erhaltenen Polyacrylatharzlösungen ist durchaus eine weitere Verbesserung der Farbzahl wünschenswert.

Ferner ist es aus der DE-B-27 49 576 bekannt, Glycidylgruppen aufweisende Acrylharze in Gegenwart von Phosphiten zu polymerisieren, um dadurch den Gehalt an Restmonomeren zu verringern. Die so erhaltenen Acrylharze werden in Kombination mit aliphatischen Dicarbonsäuren als Pulverlackbindemittel eingesetzt.

Ferner ist es bekannt, Phosphite - meist in Kombination mit anderen, insbesondere phenolischen Antioxidantien oder in Kombination mit Oxetanen bzw. oxetangruppenhaltigen Siloxanen - als Stabilisatoren bzw. Vergilbungsinhibitoren bei der Polyestersynthese und zur Stabilisierung von Propylenpolymeren einzusetzen (vgl. z.B. EP-B-228 837, EP-A-238 140 und DE-A-32 22 522).

Schließlich ist es aus der DE-A-31 03 270 bekannt, in wasserhaltigen Lacksystemen als Stabilisator gegen Verfärbungen eine Kombination aus Antioxidantien und Komplexbildner einzusetzen. Als Antioxidationsmittel werden gemäß DE-A-31 03 270 vor allem Phenothiazin sowie Brenzcatechine u.ä. eingesetzt, während Phosphite nicht genannt sind.

Der vorliegenden Erfindung liegt somit die Aufgabe zugrunde, ein Verfahren zur Herstellung eines organischen Lösungsmittels enthaltenden über zugsmittels auf der Basis von Vernetzungsmitteln und Polyacrylatharzlösungen mit einer verbesserten Farbzahl zur Verfügung zu stellen, wobei die Verwendung der überzugsmittel, insbesondere in transparenten Decklacken, zu Beschichtungen mit guten mechanischen Eigenschaften führen. Insbesondere sollten die resultierenden Überzugsmittel bei Verwendung als transparenter Decklack eine gute Haftung auf der Basislackschicht, einen guten optischen Effekt, eine hohe Transparenz, einen sehr guten Decklackstand, einen guten Glanz und gute mechanische Eigenschaften, wie Härte, Kratzfestigkeit und Elastizität, aufweisen. Nicht zuletzt muß die nach dem Trocknungsprozeß erhaltene transparente Decklackschicht eine hohe Widerstandsfähigkeit gegen klimatische Einflüsse (z.B. Temperaturschwankungen, Feuchtigkeit in Form von Wasserdampf, Regen, Tau, Belastung durch Strahlung usw.) und gegen Angriffe durch Säuren oder andere Chemikalien, wie z.B. organische Lösemittel, aufweisen.

Diese Aufgabe wird überraschenderweise durch ein Überzugsmittel der eingangs genannten Art gelöst, das dadurch gekennzeichnet ist, daß die Lösung des Acrylatharzes 0,05 bis 1,0 Gew.-%, bezogen auf den Festkörpergehalt der Acrylatharzlösung, mindestens eines organischen Phosphits der Formel (I) 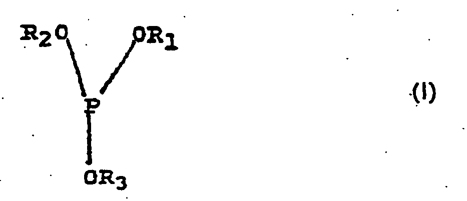 in der R₁, R₂ und R₃ gleiche oder verschiedene gesättigte, aliphatische, lineare oder verzweigte Reste mit 1 bis 18 C-Atomen, Arylreste mit 6 bis 10 C-Atomen oder Arylalkylreste mit 7 bis 20 C-Atomen sind und R₁ zusätzlich noch H bedeuten kann,
oder der Formel (II), (III) oder (IV) 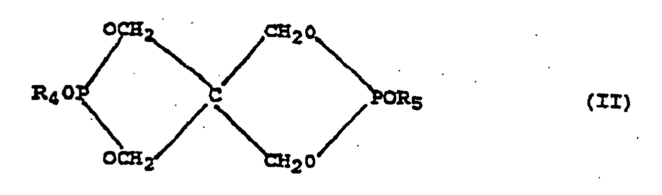 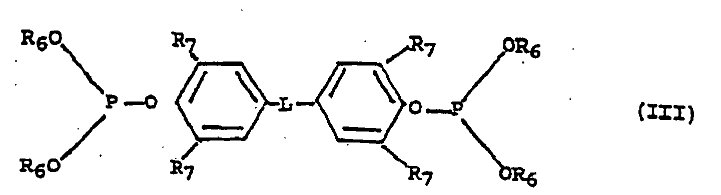 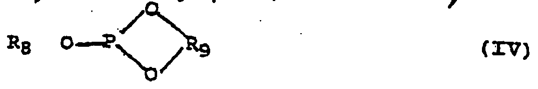 in der R₄ und R₅ gleiche oder verschiedene Aklylreste mit 1 bis 30 C-Atomen, insbesondere Lauryl-, Palmitin- und Stearylgruppen sowie Octadecylreste, Cycloalkylreste mit 5 bis 14 C-Atomen oder Arylreste mit 6 bis 20 C-Atomen, die auch Alkylsubstituenten enthalten können,
R₆ ein substituierter oder unsubstituierter Arylrest mit 6 bis 14 C-Atomen, R₇ H oder ein Alkylrest mit 1 bis 4 C-Atomen und L Sauerstoff, ein Alkylidenrest mit 1 bis 6 C-Atomen oder eine Einfachbindung,
R₈ ein Alkylenrest mit 2 bis 5 C-Atomen oder ein zweibindiger Rest eines C₆₋C₃₀-Ary1ringsystems und
R₉ die gleiche Bedeutung wie R₄ hat, mit der Maßgabe, daß von den möglichen Resten R₈ und R₉ jeweils mindestens ein C-Atom, das mit dem Sauerstoff der phosphorigen Säure unmittelbar verbunden ist, Bestandteil eines aromatischen Ringes ist, enthält und daß die Lösung des Polyacrylatharzes (A) hergestellt wird, in dem 80 bis 30 Gew.-% der bestimmtmenge des organischen Phosphits beider Polymerisationsreaktion und die Restmenge des Phosphits nach Abschluß der Polymerisation bei einer Temperatur, die unterhalb der Polymerisations temperatur liegt, zugegeben werden.
Gegenstand der vorliegenden Erfindung ist außerdem der Einsatz der Überzugsmittel in Verfahren zur Herstellung eines mehrschichtigen, schützenden und/oder dekorativen Überzuges auf einer Substratoberfläche.

Es ist überraschend und war nicht vorhersehbar, daß durch die Verwendung von 0,05 bis 1,0 Gew.-% mindestens eines Phosphits der Formel (I) bis (IV) und durch die besondere Art der Einarbeitung des Phosphits Polyacrylatharzlösungen mit einer signifikanten, visuell deutlich erkennbaren Farbzahlerniedrigung erhalten werden. Dabei ist es insbesondere überraschend und war nicht vorhersehbar, daß die Farbzahl der Polyacrylatharzlösungen durch die Art der Einarbeitung des Phosphits beeinflußt werden kann. Besonders vorteilhaft ist ferner, daß durch die Einarbeitung des Phosphits die übrigen Eigenschaften von überzugsmitteln auf der Basis dieser Polyacrylatharzlösungen nicht verschlechtert werden.

Im folgenden werden nun zunächst die einzelnen Bestandteile des nach dem erfindungsgemäßen Verfahrens hergestellten überzugsmittels näher erläutert.

Durch das erfindungsgemäße Verfahren können durch den Phosphitzusatz alle üblicherweise für die Herstellung von Überzugsmitteln eingesetzten Polyacrylatharze hinsichtlich ihrer Farbzahl verbessert werden. So sind beispielsweise Polyacrylatharze geeignet, die als vernetzende Gruppen Hydroxyl- und/oder Carboxylgruppen oder Amidgruppen oder Epoxidgruppen enthalten. Insbesondere werden aber hydroxyl- und/oder carboxylgruppenhaltige Polyacrylatharze eingesetzt. Bevorzugt werden hydroxylgruppenhaltige Polyacrylatharze mit einer OH-Zahl von 20 bis 360 mgKOH/g, bevorzugt 40 bis 200 mgKOH/g und einer Säurezahl von 0 bis 80 mgKOH/g, bevorzugt 0 bis 50 mgKOH/g und/oder carboxylgruppenhaltige Polyacrylatharze mit einer Säurezahl von 40 bis 140 mgKOH/g, bevorzugt 40 bis 100 mg KOH/g und einer OH-Zahl von 0 bis 200 mgKOH/g, bevorzugt 0 bis 100 mgKOH/g, eingesetzt.

Bevorzugt werden Polyacrylatharze mit einem zahlenmittleren Molekulargewicht von maximal 10.000, besonders bevorzugt mit einem zahlenmittleren Molekulargewicht von 1.000 bis 5.000 (bestimmt durch Gelpermeationschromatographie unter Verwendung von Polystyrol als Eichsubstanz) eingesetzt.

Die Polyacrylatharze sind herstellbar nach den üblichen Verfahren, wie beispielsweise der Lösungspolymerisation in Gegenwart eines Initiators und ggf. in Anwesenheit eines Polymerisationsreglers. Die Polymerisation erfolgt üblicherweise bei Temperaturen von 100 bis 180°C. Als Initiator sind peroxidische Initiatoren, Azoinitiatoren und thermolabile Verbindungen, z.B. auf Basis hochsubstituierter Ethanderivate, geeignet.

Die Initiatormenge beträgt in den meisten Fällen 0,1 bis 8 Gew.-%, bezogen auf die zu verarbeitende Monomerenmenge, sie kann ggf. aber auch höher liegen. Der Initiator, gelöst in einem Teil des für die Polymerisation eingesetzten Lösungsmittels, wird allmählich während der Polymerisationsreaktion zudosiert. Bevorzugt dauert der Initiatorzulauf etwa 0,5 bis 2 Stunden länger als der Monomerenzulauf, um so auch eine gute Wirkung während der Nachpolymerisationsphase zu erzielen. Werden Initiatoren mit nur einer geringen Zerfallsrate unter den vorliegenden Reaktionsbedingungen eingesetzt, so ist es auch möglich, den Initiator vorzulegen.

Die Polymerisationsbedingungen (Reaktionstemperatur, Zulaufzeit der Monomerenmischung, Menge und Art der organischen Lösemittel und Polymerisationsinitiatoren, eventuelle Mitverwendung von Molekulargewichtsreglern, wie z.B. Mercaptanen, Thiolglykolsäureestern und Chlorwasserstoffen) werden so ausgewählt, daß die erfindungsgemäß eingesetzten Polyacrylatharze ein zahlenmittleres Molekulargewicht von maximal 10.000, bevorzugt 1.000 bis 5.000(bestimmt durch Gelpermeationschromatographie unter Verwendung von Polystyrol als Eichsubstanz) aufweisen.

Zur Herstellung der Polyacrylatharze können alle üblicherweise eingesetzten Monomere eingesetzt werden.

Beispielsweise sind cycloaliphatische Ester der Acrylsäure und/oder Methacrylsäure geeignet, wie Cyclohexylacrylat, Cyclohexylmethacrylat, 4-tert.-Butylcyclohexylacrylat, 4-tert.-Butylcyclohexylmethacrylat, Isobornylacrylat und Isobornylmethacrylat. Bevorzugt wird 4-tert.-Butylcyclohexylacrylat und/oder 4-tert.-Butylcyclohexylmethacrylat eingesetzt.

Weiterhin sind zur Herstellung der Polyacrylatharze hydroxylgruppenhaltige Monomere, wie z.B. Hydroxialkylester α,β-ungesättigter Carbonsäuren mit primären oder sekundären Hydroxylgruppen geeignet. Ist eine hohe Reaktivität des Acrylatcopolymerisats erwünscht, können ausschließlich Hydroxyalkylester mit primären Hydroxylgruppen eingesetzt werden; soll das Polyacrylat weniger reaktiv sein, können ausschließlich Hydroxyalkylester mit sekundären Hydroxylgruppen eingesetzt werden. Selbstverständlich können auch Mischungen von Hydroxyalkylestern mit primären Hxydroxylgruppen und Hydroxyalkylestern mit sekundären Hydroxylgruppen verwendet werden.

Beispiele für geeignete Hydroxyalkylester α,β-ungesättigter Carbonsäuren mit primären Hydroxylgruppen sind Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate. Als Beipiele für verwendbare Hydroxyalkylester mit einer sekundären Hydroxylgruppe seien 2-Hydroxybutylacrylat, 3-Hydroxybutylacrylat und die entsprechenden Methacrylate genannt. Selbstverständlich könnn jeweils auch die entsprechenden Ester anderer α,β-ungesättigter Carbonsäuren, wie z.B. der Crotonsäure und der Isocrotonsäure eingesetzt werden.

Vorteilhaft kann das hydroxylgruppenhaltige Monomer zumindest teilweise ein Umsetzungsprodukt aus einem Mol Hydroxyethylacrylat und/oder Hydroxyethylmethacrylat und durchschnittlich zwei Mol ε-Caprolacton sein. Als hydroxylgruppenhaltiges Monomer kann zumindest teilweise auch ein Umsetzungsprodukt aus Acrylsäure und/oder Methacrylsäure mit der äquivalenten Menge eines Glycidylesters einer Carbonsäure mit einem tertiären α-Kohlenstoffatom eingesetzt werden. Glycidylester stark verzweigter Monocarbonsäuren sind unter dem Handelsnamen "Cardura" erhältlich. Die Umsetzung der Acrylsäure oder Methacrylsäure mit dem Glycidylester einer Carbonsäure mit einem tertiären α-Kohlenstoffatom kann vor, während oder nach der Polymerisationsreaktion erfolgen.

Geeignet sind ferner auch Alkylester ethylenisch ungesättigter Carbonsäuren, beispielsweise Alkylester der (Meth)Acrylsäure, der Croton- und Isocroton- und der Maleinsäure. Als Beispiele für solche Monomere seien Methyl(meth)acrylat, Ethyl(meth)acrylat, Butyl(meth)acrylat, tert.-Butyl(meth)acrylat, Isopropyl(meth)acrylat, Isobutyl(meth)acrylat, Pentyl(meth)acrylat, Isoamyl(meth)acrylat, Hexyl(meth)acrylat, 2-Ethylhexyl(meth)acrylat, Furfuryl(meth)acrylat, Octyl(meth)-acrylat, 3,5,5-Trimethylhexyl(meth)acrylat, Decyl(meth)acrylat, Lauryl(meth)acrylat, Hexadecyl(meth)-acrylat, Octadecyl(meth)acrylat, Stearyl(meth)acrylat und Ethyltriglykol(meth)acrylat genannt.

Ferner sind auch vinylaromatische Verbindungen geeignet. Vorzugsweise enthält die vinylaromatische Verbindung 8 bis 9 Kohlenstoffatome je Molekül. Beispiele für geeignete Verbindungen sind Styrol, Vinyltoluole, α-Methylstyrol, Chlorstyrole, o-, m- oder p-Methylstyrol, 2,5-Dimethylstyrol, p-Methoxystyrol, p-tert.-Butylstyrol, p-Dimethylaminostyrol, p-Acetamidostyrol und m-Vinylphenol. Bevorzugt werden Vinyltoluole sowie insbesondere Styrol eingesetzt.

Weitere geeignete Monomere sind Alkoxyethylacrylate, Aryloxyethylacrylate und die entsprechenden Methacrylate, wie z. B. Butoxyethyl(meth)acrylat und Phenoxyethyl(meth)acrylat sowie Methacrylnitril und Acrylnitril sowie Alkylester von anderen ethylenisch ungesättigten Carbonsäuren, wie z.B. Alkylester der Crotonund Isocrotonsäure sowie polymerisierbare Vinylether und Vinylester.

In Kombination mit den anderen genannten Monomeren können auch Polysiloxanmakromonomere eingesetzt werden. Geeignet sind Polysiloxanmakromonomere, die ein zahlenmittleres Molekulargewicht von 1.000 bis 40.000, bevorzugt von 2.000 bis 10.000, und im Mittel 0,5 bis 2,5 bevorzugt 0,5 bis 1,5, ethylenisch ungesättigte Doppelbindungen pro Molekül aufweisen. Geeignet sind beispielsweise die in der DE-OS 38 07 571 auf den Seiten 5 bis 7, die in der DE-OS 37 06 095 in den Spalten 3 bis 7, die in der EP-B 358 153 auf den Seiten 3 bis 6 und die in der US-PS 4,754,014 in den Spalten 5 bis 9 und in der internationalen Patentanmeldung mit der internationalen Veröffentlichungsnummer WO 92/22615 auf den Seiten 13 bis 18 beschriebenen Polysiloxanmakromonomere. Ferner sind auch andere Acryloxisilan-enthaltende Vinylmonomere mit den obengenannten Molekulargewichten und Gehalten an ethylenisch ungesättigten Doppelbindungen geeignet, beispielsweise Verbindungen, die herstellbar sind durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure.

Bevorzugt werden Polysiloxanmakromonomere der folgenden Formel eingesetzt: 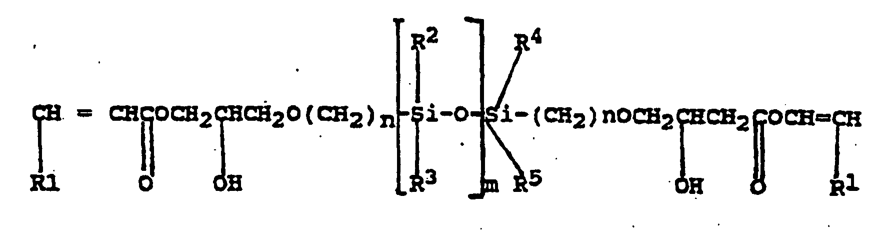 mit R¹ = H oder CH₃
R², R³, R⁴, R⁵ = gleiche oder verschiedene aliphatische Kohlenwasserstoffreste mit 1 bis 8 C-Atomen, insbesondere Methyl, oder Phenylrest.
n = 2 bis 5, bevorzugt 3
m = 8 bis 80
beispielsweise wird bevorzugt das α,ω̅-acryloxiorganofunktionelle Polydimethylsiloxan der Formel 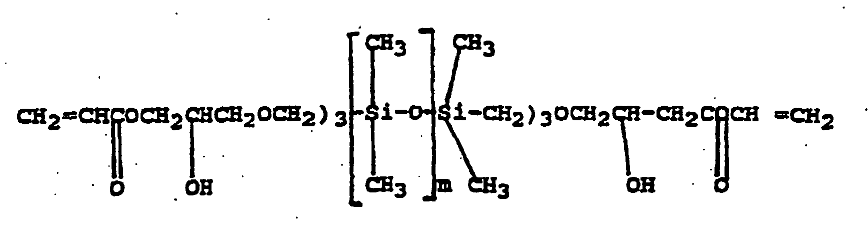 mit m ≈ 30 - 50 eingesetzt.

Die Einsatzmenge des oder der Polysiloxanmakromonomeren beträgt weniger als 5 Gew.-%, bevorzugt 0,05 bis 2,5 Gew.-%, besonders bevorzugt 0,05 bis 0,8 Gew.-%, jeweils bezogen auf das Gesamtgewicht der zur Herstellung des Polyacrylats eingesetzten Monomeren.

Als Polyacrylatharz geeignet sind beispielsweise die in der Deutschen Patentanmeldung DE-A-40 24 204 beschriebenen, in Gegenwart eines Polyesters hergestellten hydroxylgruppenhaltigen Polyacrylatharze. Wegen Einzelheiten sei auf die DE-A-40 24 204, insbesondere die Seite 3, Zeile 18, bis Seite 7, Zeile 53, verwiesen.

Geeignet sind ferner auch die in der Deutschen Patentanmeldung DE-A-38 23 005 auf der Seite 2, Zeile 52, bis Seite 6, Zeile 19, und die in der Deutschen Patentanmeldung DE-A-35 34 874 auf Seite 4, Zeile 43, bis Seite 6, Zeile 52, beschriebenen hydroxylgruppenhaltigen Polyacrylatharze.

Weiterhin sind auch die in der Deutschen Patentanmeldung DE-A-39 18 669 auf Seite 2, Zeile 59, bis Seite 7, Zeile 2, und die in der Deutschen Patentanmeldung DE-A-41 33 420 auf Seite 2, Zeile 61, bis Seite 6, Zeile 60, beschriebenen carboxylgruppenhaltigen Polyacrylatharze geeignet.

Weitere Beispiele für geeignete Polyacrylatharze sind die im Handel unter dem Namen Macrynal® SM 510 und SM 513 der Firma Hoechst sowie Synthalat® A 155 der Firma Synthopol Dr. rer. pol. Koch GmbH & Co.KG erhältlichen Polyacrylatharze.

Geeignet sind ferner die in der nicht vorveröffentlichten deutschen Patentanmeldung P 44 07 415.8 beschriebenen hydroxylgruppenhaltigen Polyacrylatharze, die erhältlich sind, indem
(m₁) 5 bis 80 Gew.-%, bevorzugt 5 bis 30 Gew.-%, eines cycloaliphatischen Esters der Methacrylsäure und/oder Acrylsäure oder eines Gemisches aus solchen Monomeren,
(m₂) 10 bis 50 Gew.-%, bevorzugt 15 bis 40 Gew.-%, eines hydroxylgruppenhaltigen Alkylesters der Methacrylsäure und/oder Acrylsäure oder eines Gemisches aus solchen Monomeren,
(m₃) 0 bis 25 Gew.-%, bevorzugt 0 bis 15 Gew.-%, eines von (m₁) und (m₂) verschiedenen hydroxylgruppenhaltigen, ethylenisch ungesättigten Monomeren oder eines Gemisches aus solchen Monomeren,
(m₄) 5 bis 80 Gew.-%, bevorzugt 5 bis 30 Gew.-%, eines von (m₁), (m₂) und (m₃) verschiedenen aliphatischen Esters der Methacryl- und/oder Acrylsäure oder eines Gemisches aus solchen Monomeren,
(m₅) 0 bis 40 Gew.-%, bevorzugt 10 bis 30 Gew.-%, eines von (m₁), (m₂), (m₃) und (m₄) verschiedenen vinylaromatischen Kohlenwasserstoffes oder eines Gemisches aus solchen Monomeren und
(m₆) 0 bis 40 Gew.-%, bevorzugt 0 bis 30 Gew.-%, eines von (m₁), (m₂), (m₃), (m₄) und (m₅) verschiedenen weiteren ethylenisch ungesättigten Monomeren oder eines Gemisches aus solchen Monomeren,
zu einem Polyacrylatharz mit einem zahlenmittleren Molekulargewicht Mn von 1000 bis 5000, einem Verhältnis von gewichtsmittlerem Molekulargewicht Mw zu zahlenmittlerem Molekulargewicht Mn von weniger als 5,0, bevorzugt von 1,8 bis 4,0 und einer OH-Zahl von 60 bis 180, bevorzugt von 100 bis 150 mgKOH/g polymerisiert werden, wobei die Summe der Gewichtsanteile der Komponenten (m₁) bis (m₆) stets 100 Gew.-% beträgt und wobei als Komponente (m₂) nur Monomere oder Mischungen von Monomeren eingesetzt werden, die bei alleiniger Polymerisation des jeweiligen Monomers ein Polyacrylatund/oder Polymethacrylatharz mit einer Glasübergangstemperatur von -10°C bis +6°C oder von +60°C bis 80°C ergeben.

Die Verwendung dieser Polyacrylatharze führt zu überzugsmitteln, die bei Verwendung als transparenter Decklack zu Beschichtungen mit insbesondere einer gegenüber herkömmlichen Überzugsmitteln verbesserten Haftung führen.

Als Komponente (m₂) wird bevorzugt 3-Hydroxypropylmethacrylat und/oder 2-Hydroxypropylmethacrylat und/oder 3-Hydroxypropylacrylat und/oder 2-Hydroxypropylacrylat eingesetzt. Beispiele für die als Komponenten (m₁) sowie (m₃) bis (m₆) geeignete Monomere sind die bei der Beschreibung des erfindungsgemäß eingesetzten Acrylatharzes beschriebenen Monomeren.

Ferner sind auch die in der nicht vorveröffentlichten deutschen Patentanmeldung P 44 07 409.3 beschriebenen Polyacrylatharze geeignet, die erhältlich sind, indem
(p1) 10 bis 51 Gew.-% einer Mischung aus
   (p11) einem oder mehreren Monomeren, ausgewählt aus der Gruppe 4-Hydroxy-n-butylacrylat und/oder 4-Hydroxy-n-butylmethacrylat und/oder 3-Hydroxy-n-butylacrylat und/oder 3-Hydroxy-n-butylmethacrylat und
   (p12) einem oder mehreren Monomeren, ausgewählt aus der Gruppe 3-Hydroxy-n-propylacrylat und/oder 3-Hydroxy-n-propylmethacrylat und/oder 2-Hydroxy-n-propylacrylat und/oder 2-Hydroxy-n-propylmethacrylat,
(p2) 0 bis 20 Gew.-% eines von (p1) verschiedenen hydroxylgruppenhaltigen Esters der Acrylsäure oder der Methacrylsäure mit mindestens 5 C-Atomen im Alkoholrest oder eines Gemisches aus solchen Monomeren,
(p3) 28 bis 85 Gew.-% eines von (p1) und (p2) verschiedenen aliphatischen oder cycloaliphatischen Esters der Acrylsäure oder der Methacrylsäure mit mindestens 4 C-Atomen im Alkoholrest oder eines Gemisches aus solchen Monomeren,
(p4) 0 bis 25 Gew.-% eines von (p1), (p2) und (p3) verschiedenen vinylaromatischen Kohlenwasserstoffs oder eines Gemisches aus solchen Monomeren,
(p5) 0 bis 5 Gew.-% einer ethylenisch ungesättigten carbonsäure oder einer Mischung aus ethylenisch ungesättigten Carbonsäuren und
(p6) 0 bis 20 Gew.-% eines von (p1), (p2), (p3), (p4) und (p5) verschiedenen ethylenisch ungesättigten Monomeren oder eines Gemisches aus solchen Monomeren
zu einem Polyacrylatharz mit einer Hydroxylzahl von 60 bis 200 mgKOH/g, einer Säurezahl von 0 bis 35 mgKOH/g und einem zahlenmittleren Molekulargewicht von 1000 bis 5000 polymerisiert werden, wobei die Summe der Gewichtsanteile der Komponenten (p1) bis (p6) jeweils 100 Gew.-% beträgt.

Beispiele für die als Monomerkomponenten (p1) bis (p6) geeignete Verbindungen sind die bereits oben bei der Beschreibung des Acrylatharzes (A) aufgeführten Verbindungen.

Die Verwendung dieser Polyacrylatharze in dem erfindungsgemaßen Verfahren führt zu überzugsmitteln, die bei Verwendung als transparenter Decklack zu Beschichtungen mit insbesondere einer gegenüber herkömmlichen Überzugsmitteln verbesserten Haftung führen.

Es ist erfindungswesentlich, daß die bei dem erfindungsgemäßen Verfahren eingesetzten Polyacrylatharzlösungen 0,05 bis 1,0 Gew.-%, bevorzugt 0,15 bis 0,5 Gew.%, jeweils bezogen auf den Festkörpergehalt der Polyacrylatharzlösung, mindestens eines Phosphits enthalten.

Für den Einsatz in den Polyacrylatharzlösungen sind beispielsweise die in der DE-B-27 49 576, der DE-A-32 22 522 und der EP-B-228 837 beschriebenen Phosphite geeignet. So sind z.B. Phosphite der allgemeinen Formel (I) 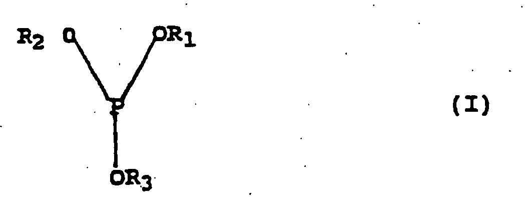 geeignet, in der R₁, R₂ und R₃ gleiche oder verschiedene gesättigte aliphatische, lineare oder verzweigte Reste mit 1 bis 18 C-Atomen, Arylreste mit 6 bis 10 C-Atomen oder Arylalkylreste mit 7 bis 20 C-Atomen sind und R₁ zusätzlich noch Wasserstoff bedeuten kann. Geeignete Phosphite der allgemeinen Formel (I) sind beispielsweise Dimethylphosphit, Dibutylphosphit, Dilaurylphosphit, Diphenylphosphit, Dinaphthylphosphit, Di(nonylphenyl)phosphit, Methyloctylphosphit, Cetylphenylphosphit, Trimethylphosphit, Tributylphosphit, Tridecylphosphit, Tricethylphosphit, Triphenylphosphit, Trinaphthylphosphit, Tris(nonylphenyl)phosphit, Didecylphenylphosphit, Methyldecylphenylphosphit, Trioctadecylphosphit, Tris(2,4-di-t-butylphenyl)phosphit u.ä. Besonders bevorzugt wird Triisodecylphosphit eingesetzt.

Für den Einsatz in den Polyacrylatharzlösungen geeignet sind ferner die in der DE-A-32 22 522 beschriebenen Phosphite, beispielsweise di(substituierte) Pentaerythrityldiphosphite der allgemeinen Formel (II) 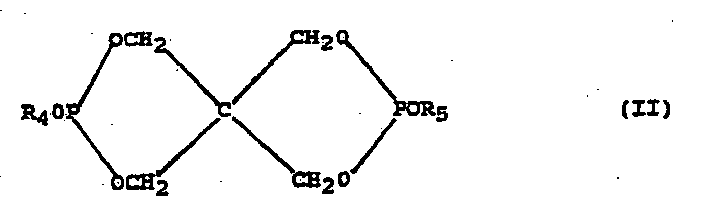 in der R₄ und R₅ gleiche oder verschiedene Aklylreste mit 1 bis 30 C-Atomen, insbesondere Lauryl-, Palmitin- und Stearylgruppen sowie Octadecylreste, Cycloalkylreste mit 5 bis 14 C-Atomen oder Arylreste mit 6 bis 20 C-Atomen, die auch Alkyl- substituenten enthalten können, sind.

Beispiele für derartige Phosphite sind Dioctadecylpentaerythrityldiphosphit und Distearylpentaerythritylphosphit.

Geeignet sind schließlich die ebenfalls in der DE-A-32 22 522 beschriebenen Phosphite der allgemeinen Formeln (III) und (IV) 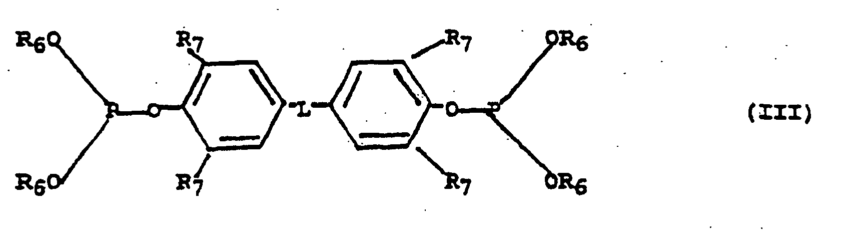 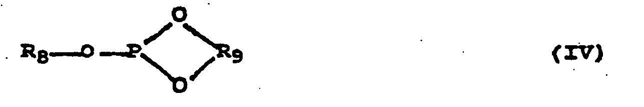 in denen R₆ ein substituierter oder unsubstituierter Arylrest mit 6 bis 14 C-Atomen, R₇ H oder ein Alkylrest mit 1 bis 4 C-Atomen und L Sauerstoff, ein Alkylidenrest mit 1 bis 6 C-Atomen oder eine Einfachbindung, R₈ ein Alkylenrest mit 2 bis 5 C-Atomen oder ein zweibindiger Rest eines C₆-C₃₀-Arylringsystems und R₉ die gleiche Bedeutung wie R₄ hat, mit der Maßgabe, daß von den möglichen Resten R₈ und R₉ jeweils mindestens ein C-Atom, das mit dem Sauerstoff der phosphorigen Säure unmittelbar verbunden ist, Bestandteil eines aromatischen Ringes ist.

Erfindungsgemäß wird ein Teil des Phosphits zusammen mit den Monomeren direkt bei der Polymerisation zugegeben. Die restliche Menge des Phosphits wird dann erst nach Herstellung des Polyacrylatharzes zugesetzt. Dabei werden 80 bis 30 Gew.-%, der Gesamtmenge des Phosphits bei der Polymerisationsreaktion und die Restmenge des Phosphits nach Abschluß der Polymerisation zugegeben. Bei dieser Aufteilung der Phosphitmengen ist die erreichbare Farbzahlerniedrigung am höchsten. Es ist dabei erfindungswesentlich, daß die Restmenge des Phosphits nach der Polymerisationsreaktion bei einer Temperatur, die unterhalb der Polymerisationstemperatur liegt, zugegeben wird. Vorteilhafterweise können die Restmengen der Phosphite den Lösungen der Polyacrylatharze nach ihrer Herstellung bei einer Temperatur, die um mindestens 20°C, bevorzugt um mindestens 25°C unter der Polymerisationstemperatur liegt, zugegeben werden. Die Restmengen der Phosphite können daher den Lösungen der Polyacrylatharze beispielsweise nach Abschluß der Polymerisationsreaktionsreaktion bei einer Temperatur von maximal 115°C, bevorzugt bei einer Temperatur von maximal 100°C, zugegeben werden. Ferner können diese Restmengen der Phosphite zumindest teilweise oder aber auch vollständig den Lösungen der Polyacrylate unmittelbar oder aber auch erst eine oder mehrere Stunden oder Tage nach ihrer Herstellung bei Raumtemperatur zugegeben werden.

Die erfindungsgemäßen hergestellten Überzugsmittel enthalten ferner ein oder mehrere organische Lösungsmittel. Diese Lösungsmittel werden üblicherweise in Mengen von 20 bis 70 Gew.-%, bevorzugt von 25 bis 65 Gew.-%, jeweils bezogen auf das Gesamtgewicht des Überzugsmittels, eingesetzt.

Beispiele für geeignete Lösungsmittel sind höher substituierte Aromaten, wie z.B. Solvent Naphtha®, Schwerbenzol, verschiedene Solvesso®-Typen, verschiedene Shellsol®-Typen und Deasol® sowie höhersiedende aliphatische und cycloaliphatische Kohlenwasserstoffe, wie z.B. verschiedene Testbenzine, Mineralterpentinöl, Tetralin und Dekalin sowie verschiedene Ester, wie z.B. Ethylglykolacetat, Butylglykolacetat, Ethyldiglykolacetat u.ä..

Die Polyacrylatharzlösungen werden zur Herstellung von Überzugsmitteln mit geeigneten Vernetzungsmitteln kombiniert. Die Auswahl diser Vernetzungsmittel richtet sich nach den funktionellen Gruppen des Polyacrylatharzes. Weist das Polyacrylatharz beispielsweise Hydroxylgruppen auf, so sind als Vernetzungsmittel beispielsweise Isocyanate und/oder Aminoplastharze, insbesondere Isocyanate, geeignet.

Bei der Polyisocyanatkomponente handelt es sich um beliebige organische Polyisocyanate mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern. Als Zusatzmittel geeignete Lösemittel für die Polyisocyanate sind beispielsweise Ethoxiethylpropionat, Butylacetat und ähnliches.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind 1,2-Ethylendiisocyanat, 1,4-Tetramethylendiisocyanat, 1,6-Hexamethylendiisocyanat, 2,2,4- bzw. 2,4,4-Trimethyl-1,6-hexamethylendiisocyanat, 1,12-Dodecandiisocyanat, ω,ω'-Diisocyanatodipropylether, Cyclobutan-1,3-diisocyanat, Cyclohexan-1,3- und -1,4-diisocyanat, 2,2- und 2,6-Diisocyanato-1-methylcyclohexan, 3-Isocyanatomethyl-3,5,5-trimethylcyclohexylisocyanat("Isophorondiisocyanat"), 2,5- und 3,5-Bis(isocyanatomethyl)-8-methyl-1,4-methano-decahydronaphthalin, 1,5-, 2,5-, 1,6- und 2,6-Bis(isocyanatomethyl)-4,7-methanohexahydroindan, 1,5-, 2,5-, 1,6- und 2,6-Bis(isocyanato)-4,7-methanhexahydroindan, Dicyclohexyl-2,4'- und -4,4'-diisocyanat, 2,4- und 2,6-Hexahydrotoluyiendiisocyanat, Perhydro-2,4'- und -4,4'-diphenylmethandiisocyanat, ω,ω'-Diisocyanato-1,4-diethylbenzol, 1,3- und 1,4-Phenylendiisocyanat, 4,4'-Diisocyanato-diphenyl, 4,4'-Diisocyanato-3,3'-dichlordiphenyl, 4,4'-Diisocyanato-3,3'-dimethoxi-diphenyl, 4,4'-Diisocyanato-3,3'-dimethyl-diphenyl, 4,4'-Diisocyanato-3,3'-diphenyl-diphenyl, 2,4'- und 4,4'-Diisocyanato-diphenylmethan, Naphthylen-1,5-diisocyanat, Toluylendiisocyanate, wie 2,4- bzw. 2,6-Toluylendiisocyanat, N,N'-(4,4'-Dimethyl-3,3'-diisocyanatodiphenyl)-uretdion, m-Xylylendiisocyanat, Dicyclohexylmethandiisocyanat, Tetramethylxylylendiisocyanat, aber auch Triisocyanate, wie 2,4,4'-Triisocyanatodiphenylether, 4,4',4''-Triisocyanatotriphenylmethan. Bevorzugt werden, ggf. in Kombination mit den obengenannten Polyisocyanaten, Isocyanuratgruppen und/oder Biuretgruppen und/oder Allophanatgruppen und/oder Urethangruppen und/oder Harnstoffgruppen aufweisende Polyisocyanate eingesetzt. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, Dicyclohexylmethan-2,4'diisocyanat oder Dicyclohexylmethan-4,4'-diisocyanat oder Mischungen aus diesen Polyisocyanaten eingesetzt. Ganz besonders bevorzugt werden Gemische aus Uretdionund/oder Isocyanuratgruppen und/oder Allophanatgruppen aufweisenden Polyisocyanaten auf Basis von Hexa-methylendiisocyanat, wie sie durch katalytische Oligomerisierung von Hexamethylendiisocyanat unter Verwendung von geeigneten Katalysatoren entstehen, eingesetzt. Die Polyisocyanatkomponente (B) kann im übrigen auch aus beliebigen Gemischen der beispielhaft genannten Polyisocyanate bestehen.

Eingesetzt werden können aber auch die oben beschriebenen, mit üblichen Verkappungsmitteln, wie z.B. Phenolen, Alkoholen, Acetessigsäureestern, Ketoxim- und ε-Caprolactam, umgesetzten Isocyanate. Diese Kombinationen sind bei Raumtemperatur stabil und härten im allgemeinen erst bei Temperaturen oberhalb von 100°C.
In besonderen Fällen, z.B. bei Verwendung von Acetessigsäureestern zur Verkappung, kann auch bereits unter 100°C eine Vernetzung eintreten.

Die Menge des eingesetzten Vernetzers wird so gewählt, daß das Verhältnis der Isocyanatgruppen des Vernetzers zu den Hydroxylgruppen der Bindemittelkomponente im Bereich von 1 : 3 bis 3 : 1 liegt.

Wenn die Polyacrylatharze als funktionelle Gruppen Carboxylgruppen enthalten, können als Vernetzungsmittel beispielweise Epoxidverbindungen mit mindestens 2 Epoxidgruppen pro Molekül eingesetzt werden. Aufgrund der geringeren Vergilbungsneigung werden insbesondere aliphatische und/oder alicyclische Epoxidharze eingesetzt. Das Vernetzungsmittel wird dabei üblicherweise in einer solchen Menge eingesetzt, daß das Verhältnis der freien Carboxylgruppen des Bindemittels (Acrylatcopolymerisat plus ggf. weiteres carboxylgruppenhaltiges Polykondensationsharz) zu den Epoxidgruppen des Epoxidharzes im Bereich von 1 : 3 bis 3 : 1 liegt.

Beispiele für als Vernetzungsmittel geeignete Epoxidharze sind cycloaliphatische Bisepoxide, epoxidierte Polybutadiene, die durch Reaktion von handelsüblichen Polybutadienölen mit Persäuren bzw. organischen Säure-H₂O₂-Mischungen entstehen, Epoxidierungsprodukte natürlich vorkommender Fette, Öle, Fettsäurederivate, modifizierter öle, epoxidgruppenhaltige Novolake, Glycidylether eines mehrwertigen Alkohols, z.B. Ethylenglykoldiglycidylether, Glycerinpolyglycidylether, Sorbitolpolyglycidylether, Trimethylolpropanpolyglycidylether und Pentaerythritpolyglycidylether sowie geeignete Acrylatharze mit seitenständigen Oxirangruppen.
Des weiteren können auch vorteilhaft als Vernetzungsmittel Umsetzungsprodukte von hydroxylgruppenhaltigen Polyepoxiden mit Di- oder Polyisocyanaten eingesetzt werden, wie sie z.B. durch Umsetzung OH-funktioneller Epoxide, wie z.B. von Sorbitolpolyglycidylethern, mit Isophorondiisocyanat entstehen.

Ebenfalls als bevorzugte Vernetzungsmittel eingesetzt werden polare Epoxide, beispielsweise auf der Basis eines Umsetzungsproduktes von Melaminharzen mit Acrylamid unter anschließender Epoxidierung der Acryl-Doppelbindung. Beispielhaft für diese Substanzklasse sei das Handelsprodukt Santolink LSE 114 und Santolink LSE 120 der Firma Monsanto genannt, bei dem das Epoxidharzgrundgerüst ein zweikerniges Melamin ist, das zahlenmittlere Molekulargewicht bei ca. 1200 bis 2000 liegt und das Epoxid-Äquivalentgewicht bei ca. 300 bis 350 liegt.

Üblicherweise enthalten die nach dem erfindungsgemäßen Verfahren hergestellten Beschichtungsmittel 15 bis 45 Gew.-% des Acrylatharzes und 6 bis 20 Gew.-% des Vernetzungsmittels (B), jeweils bezogen auf das Gesamtgewicht des Beschichtungsmittels und bezogen auf den Festkörpergehalt der Bindemittelund Vernetzerkomponenten.

Die unter Verwendung der Polyacrylatharzlösungen hergestellten Beschichtungsmittel können außerdem übliche Hilfs- und Zusatzstoffe in üblichen Mengen, bevorzugt 0,01 bis 10 Gew.-%, bezogen auf das Gesamtgewicht des Beschichtungsmittel, enthalten. Beispiele für geeignete Hilfs- und Zusatzstoffe sind Verlaufsmittel, wie Silikonöle, Weichmacher, wie Phosphorsäureester und Phthalsäureester, viskositätskontrollierende Zusätze, Mattierungsmittel, UV-Absorber und Lichtschutzmittel. Ggf. können die Polyacrylatharzlösungen auch Füllstoffe und/oder Pigmente in üblichen Mengen, bevorzugt 0 bis 30 Gew.-%, bezogen auf das Gesamtgewicht des Beschichtungsmittels, enthalten.

Die Herstellung der Beschichtungsmittel erfolgt in bekannter Weise duch Mischen und ggf. Dispergieren der einzelnen Komponenten.

Diese Beschichtungsmittel können durch Spritzen, Fluten, Tauchen, Walzen, Rakeln oder Streichen auf ein Substrat in Form eines Films aufgebracht werden, wobei der Film anschließend zu einem festhaftenden Überzug gehärtet wird.

Die Aushärtung dieser Beschichtungsmittel erfolgt üblicherweise bei Raumtemperatur oder leicht erhöhter Temperatur, bevorzugt bei leicht erhöhter Temperatur, vorteilhafterweise bei Temperaturen unterhalb von 120°C, bevorzugt bei Temperaturen unterhalb von 80°C sowie bevorzugt bei Temperaturen oberhalb von 60°C. Die Beschichtungsmittel können aber - je nach eingesetztem Vernetzer - auch unter Einbrennbedingungen, d.h. bei Temperaturen von mindestens 120°C, gehärtet werden.

Als Substrate eignen sich insbesondere Metalle sowie Holz, Kunststoff, Glas u.ä..

Aufgrund der kurzen Härtungszeiten und niedrigen Härtungstemperaturen werden die nach dem erfindungsgemäßen Verfahren hergestellten Beschichtungsmittel bevorzugt für die Reparaturlackierung, insbesondere die Autoreparaturlackierung, die Lackierung von Großfahrzeugen und Lkw-Aufbauten sowie für die Kunststofflackierung (insbesondere Härtung im Bereich von 80 - 106°C) verwendet. Sie können aber - je nach eingesetztem Vernetzer - auch für die Automobilserienlackierung eingesetzt werden.
Des weiteren eignen sie sich insbesondere als Klarlack.

Gegenstand der vorliegenden Erfindung ist daher auch ein Verfahren zur Herstellung eines mehrschichtigen schützenden und/oder dekorativen Überzuges auf einer Substratoberfläche, bei dem
(1) ein pigmentierter Basislack auf die Substratoberfläche aufgebracht wird,
(2) aus dem in Stufe (1) aufgebrachten Basislack ein Polymerfilm gebildet wird,
(3) auf die so erhaltene Basisschicht ein transparenter Decklack aufgebracht wird und anschließend
(4) Basislackschicht und Decklackschicht zusammen gehärtet werden,
dadurch gekennzeichnet, daß als Decklack das nach dem erfindungsgemäßen Verfahren hergestellten Beschichtungsmittel eingesetzt wird.

Die in diesem Verfahren eingesetzten Basislacke sind bekannt und brauchen daher nicht näher erläutert zu werden. Beispiele für geeignete Basislacke sind auch die in der DE-OS 41 10 520, DE-OS 40 09 000, der DE-OS-40 24 204, der EP-A-355433, der DE-OS 35 45 618, der DE-OS 38 13 866 und der nicht vorveröffentlichten deutschen Patentanmeldung P 42 32 717.2 beschriebenen Basislacke.

Geeignet sind außerdem die in der noch nicht veröffentlichten deutschen Patentanmeldung P 43 27 416.1 beschriebenen Basislacke, die dadurch gekennzeichnet sind, daß sie einen hydroxylgruppenhaltigen Polyester mit einem gewichtsmittleren Molekulargewicht Mw von 40.000 - 200.000 und eine Uneinheitlichkeit Mw/ Mn > 8 enthalten und daß zur Herstellung des Polyesters mindestens 50 Gew.-% aromatische Dicarbonsäuren oder deren veresterungsfähige Derivate eingesetzt worden sind, wobei aber der Gehalt an Phthalsäureanhydrid maximal 80 Gew.-% beträgt und wobei die Gew.-%-Angaben jeweils auf das Gesamtgewicht der zur Herstellung des Polyesters eingesetzten Säurekomponenten bezogen sind.

Mit dem nach dem erfindungsgemäßen Verfahren hergestellten Beschichtungsmittel können auch oxidativ trocknende, pigmentierte oxidativ trocknende sowie pigmentierte 2K-Polyurethanlacke, die üblicherweise im Bereich der ggf. einschichtigen Autoreparaturlackierung eingesetzt werden, überlackiert werden. Auch in diesem Falle werden Beschichtungen mit den gewünschten vorteilhaften Eigenschaften erhalten.

Nachfolgend wird die Erfindung anhand von Ausführungsbeispielen näher erläutert. Alle Angaben über Teile und Prozente sind dabei Gewichtsangaben, falls nicht ausdrücklich etwas anderes festgestellt wird.

Die Herstellung der Acrylatcopolymerisate V1 bis V5 und E1 bis E8 erfolgte jeweils in einem 4-Liter-Edestahlpolymerisationskessel mit Rührer, Rückflußkühler, einem Monomerenzulauf und einem Initiatorzulauf. Die jeweils angegebenen Komponenten werden eingewogen und dann die Vorlage auf 145°C aufgeheizt.

Mit dem Start aller Zuläufe wird gleichzeitig begonnen; innerhalb von 4 h wird der Monomerenzulauf gleichmäßig zudosiert; innerhalb von 4,5 h wird der Initiatorzulauf gleichmäßig zudosiert. Der Initiatorzulauf endet 30 Minuten nach Ende des Monomerzulaufs. Während der Polymerisation wird die Temperatur im Kessel auf 142 - 145°C gehalten. Danach wird noch 2 h nachpolymerisiert. Anschließend wird die Temperatur auf 120°C gesenkt und das Acrylatharz ggf. mit der angegebenen Lösemittelmischung auf 54 % Festkörper angelöst.

### Vergleichsbeispiel 1

### Vorlage:

685,4 Teile Shellsol® A (handelsübliches aromatisches Kohlenwasserstoffgemisch mit einem Siedbereich zwischen 165 und 185°C der Firma Shell Chemie GmbH)

### Monomerenzulauf:

460 Teile (23 %) Styrol
120 Teile (6 %) n-Butylmethacrylat
720 Teile (36 %) Hydroxypropylmethacrylat
280 Teile (14 %) tert.-Butylcyclohexylacrylat
420 Teile (21 %) Methylmethacrylat
10 Teile Mercaptoethanol

### Initiatorzulauf:

43,6 Teile tert.-Butylcumylperoxid
194,7 Teile Xylol

### Lösemittelmischung zur Festkörpersenkung nach der Polymerisation:

487 Teile Butylacetat

Das so erhaltene Polyacrylatharz V1 weist einen Festkörpergehalt von 61,5% (1h 130°C mit 2 Teilen Xylol), eine Säurezahl von 2,3 mgKOH/g, eine OH-Zahl von ca. 140 mgKOH/g und eine Viskosität von 2,4 dPa.s (50%ig in Butylacetat bei 23°C, ICI Platte-Kegel-Viskosimeter) auf.

### Vergleichsbeispiel 2

Es wird analog zu Vergleichsbeispiel 1 ein Polyacrylatharz E1 hergestellt, allerdings mit dem Unterschied, daß nach Abschluß der Polymerisation bei einer Temperatur von 55°C zusätzlich 4,0 Teile (0,20 %, bezogen auf das Gesamtgewicht der Monomerenmischung, des Inititiators und des Reglers) Triisodecylphosphit zugesetzt werden.

Das so erhaltene Polyacrylatharz E1 weist einen Festkörpergehalt von 57,8 % (1h 130°C mit 2 Teilen Xylol), eine Säurezahl von 1,6 mgKOH/g, eine OH-Zahl von 140 mgKOH/g und eine Viskosität von 2,9 dPa.s (50%ig in Butylacetat bei 23°C, ICI Platte-Kegel-Viskosimeter) auf.

### Vergleichsbeispiel 3

Es wird analog zu Vergleichsbeispiel 2 ein Polyacrylatharz E2 hergestellt, allerdings mit dem Unterschied, daß nach Abschluß der Polymerisation bei einer Temperatur von 55°C zusätzlich 5,0 Teile (0,25 %, bezogen auf das Gesamtgewicht der Monomerenmischung, des Initiators und des Reglers) Triisodecylphosphit zugesetzt werden.

Das so erhaltene Polyacrylatharz E2 weist einen Festkörpergehalt von 57,8 % (1h 130°C mit 2 Teilen Xylol), eine Säurezahl von 1,6 mgKOH/g, eine OH-Zahl von ca. 140 mgKOH/g und eine Viskosität von 2,9 dPa.s (50%ig in Butylacetat bei 23°C, ICI Platte-Kegel-Viskosimeter) auf.

### Vergleichsbeispiel 4

Es wird analog zu Vergleichsbeispiel 1 ein Polyacrylatharz V2 hergestellt, allerdings mit dem Unterschied, daß in den Monomerenzulauf zusätzlich 4 Teile (0,2 %, bezogen auf das Gesamtgewicht der Monomerenmischung, des Initiators und des Reglers) Triisodecylphosphit eingewogen werden.

Das so erhaltene Polyacrylatharz V2 weist einen Festkörpergehalt von 62,4% (1h 130°C mit 2 Teilen Xylol), eine Säurezahl von 2,0 mgKOH/g, eine OH-Zahl von ca. 140 mgKOH/g und eine Viskosität von 4,0 dPa.s (50%ig in Butylacetat bei 23°C, ICI Platte-Kegel-Viskosimeter) auf.

### Beispiel 1

Es wird analog zu Vergleichsbeispiel 4 ein Polyacrylatharz E3 hergestellt, allerdings mit dem Unterschied, daß nach Abschluß der Polymerisation bei einer Temperatur von 55°C zusätzlich 1,0 Teile (0,05 %, bezogen auf das Gesamtgewicht der Monomerenmischung, des Initiators und des Reglers) Triisodecylphosphit zugesetzt werden.

Das so erhaltene Polyacrylatharz E3 weist einen Festkörpergehalt von 61,7% (1h 130°C mit 2 Teilen Xylol), eine Säurezahl von 1,2 mgKOH/g, eine OH-Zahl von ca. 140 mgKOH/g und eine Viskosität von 3,6 dPa.s (50%ig in Butylacetat bei 23°C, ICI Platte-Kegel-Viskosimeter) auf.

### Vergleichsbeispiel 5

Es wird analog zu Vergleichsbeispiel 4 ein Polyacrylatharz E4 hergestellt, allerdings mit dem Unterschied, daß nach Abschluß der Polymerisation bei einer Temperatur von 100°C zusätzlich 0,6 Teile (0,03 %, bezogen auf das Gesamtgewicht der Monomerenmischung, des Reglers und des Initiators) Triisodecylphosphit zugesetzt werden.

Das so erhaltene Polyacrylatharz E4 weist einen Festkörpergehalt von 61,5% (1h 130°C mit 2 Teilen Xylol), eine Säurezahl von 3,4 mgKOH/g, eine OH-Zahl von ca. 140 mgKOH/g und eine Viskosität von 3,2 dPa.s (50%ig in Butylacetat bei 23°C, ICI Platte-Kegel-Viskosimeter) auf.

### Vergleichsbeispiel 6

Es wird analog zu Vergleichsbeispiel 4 ein Polyacrylatharz V3 hergestellt, allerdings mit dem Unterschied, daß anstelle von 4 Teilen nur 1,0 Teile (0,05 %, bezogen auf das Gesamtgewicht der Monomerenmischung, des Reglers und des Initiators) Triisodecylphosphit in den Monomerzulauf eingewogen werden.

Das so erhaltene Polyacrylatharz V3 weist einen Festkörpergehalt von 61,9 % (1h 130°C mit 2 Teilen Xylol), eine Säurezahl von 3,5 mgKOH/g, eine OH-Zahl von ca. 140 mgKOH/g und eine Viskosität von 3,3 dPa.s (50%ig in Butylacetat bei 23°C, ICI Platte-Kegel-Viskosimeter) auf.

### Vergleichsbeispiel 7

Es wird analog zu Vergleichsbeispiel 6 ein Polyacrylatharz E5 hergestellt, allerdings mit dem Unterschied, daß nach Abschluß der Polymerisation bei einer Temperatur von 100°C zusätzlich 4,0 Teile (0,2 %, bezogen auf das Gesamtgewicht der Monomerenmischung, des Reglers und des Initiators) Triisodecylphosphit zugesetzt werden.

Das so erhaltene Polyacrylatharz E5 weist einen Festkörpergehalt von 61,9% (1h 130°C mit 2 Teilen Xylol), eine Säurezahl von 3,5 mgKOH/g, eine OH-Zahl von ca. 140 mgKOH/g und eine Viskosität von 3,3 dPa.s (50%ig in Butylacetat bei 23°C, ICI Platte-Kegel-Viskosimeter) auf.

### Vergleichsbeispiel 8

Es wird analog zu Vergleichsbeispiel 1 ein Polyacrylatharz V4 hergestellt, allerdings mit dem Unterschied, daß folgender Initiatorzulauf mit einem Azoinitiator anstelle eines peroxidischen Initiators eingesetzt wird:

### Initiatorzulauf:

41 Teile 2,2-Azobis(2-methylbutannitril)
196 Teile Xylol

Das so erhaltene Polyacrylatharz V4 weist einen Festkörpergehalt von 61,7% (1h 130°C mit 2 Teilen Xylol), eine Säurezahl von 1,2 mgKOH/g, eine OH-Zahl von ca. 140 mgKOH/g und eine Viskosität von 3,6 dPa.s (50%ig in Butylacetat bei 23°C, ICI Platte-Kegel-Viskosimeter) auf.

### Vergleichsbeispiel 9

Es wird analog zu Vergleichsbeispiel 8 ein Polyacrylatharz E6 hergestellt, allerdings mit dem Unterschied, daß nach Abschluß der Polymerisation bei einer Temperatur von 55°C zusätzlich 3,5 Teile (0,17 %, bezogen auf das Gesamtgewicht der Monomerenmischung, des Initiators und des Reglers) Triisodecylphosphit zugesetzt werden.

Das so erhaltene Polyacrylatharz E6 weist einen Festkörpergehalt von 61,7 % (1h 130°C mit 2 Teilen Xylol), eine Säurezahl von 1,2 mgKOH/g, eine OH-Zahl von ca. 140 mgKOH/g und eine Viskosität von 3,6 dPa.s (50%ig in Butylacetat bei 23°C, ICI Platte-Kegel-Viskosimeter) auf.

### Vergleichsbeispiel 10

### Vorlage:

1585 Teile Shellsol® A (handelsübliches aromatisches Kohlenwasserstoffgemisch mit einem Siedbereich zwischen 165 und 185°C der Firma Shell Chemie GmbH)
1125 Teile (25%) Cardura® E10 (handelsüblicher Glycidylester der Versaticsäure der Firma Shell Chemie GmbH)

### Monomerenzulauf:

900 Teile (20%) Methylmethacrylat
1350 Teile (30 %) Styrol
765 Teile (17%) Hydroxyethylmethacrylat
360 Teile (8%) Acrylsäure
22,5 Teile Mercaptoethanol

### Initiatorzulauf:

99 Teile tert.-Butylcumylperoxid
396 Teile Xylol

### Lösemittelmischung zur Festkörpersenkung nach der Polymerisation:

334 Teile Xylol
1429 Teile Butylacetat
60 Teile Butoxyl (handelsübliches Lösemittel auf Basis Methoxybutylacetat der Firma Hoechst AG)
128 Teile Butylglykolacetat

Das so erhaltene Polyacrylatharz V5 weist einen Festkörpergehalt von 54,5% (1h 130°C mit 2 Teilen Xylol), eine Säurezahl von 9,0 mgKOH/g, eine OH-Zahl von ca. 125 mgKOH/g und eine Viskosität von 12 dPa.s (originale Lösung bei 23°C, ICI Platte-Kegel-Viskosimeter) auf.

### Vergleichsbeispiel 11

Es wird analog zu Vergleichsbeispiel 10 ein Polyacrylatharz E7 hergestellt, allerdings mit dem Unterschied, daß nach Abschluß der Polymerisation bei einer Temperatur von <60°C zusätzlich 9,1 Teile (0,20 %, bezogen auf das Gesamtgewicht der Monomerenmischung, des Reglers und des Initiators) Triisodecylphosphit zugesetzt werden.

Das so erhaltene Polyacrylatharz E7 weist einen Festkörpergehalt von 54,5% (1h 130°C mit 2 Teilen Xylol), eine Säurezahl von 9,0 mgKOH/g, eine OH-Zahl von ca. 125 mgKOH/g und eine Viskosität von 12 dPa.s (originale Lösung bei 23°C, ICI Platte-Kegel-Viskosimeter) auf.

### Vergleichsbeispiel 12

Es wird analog zu Vergleichspeisbeispiel 11 ein Polyacrylatharz E8 hergestellt, allerdings mit dem Unterschied, daß die 9,1 Teile Triisodecylphosphit erst 24 h nach Herstellung des Polyacrylatharzes bei einer Temperatur von 23°C zugesetzt werden.

Das so erhaltene Polyacrylatharz E8 weist einen Festkörpergehalt von 54,5% (1h 130°C mit 2 Teilen Xylol), eine Säurezahl von 9,0 mgKOH/g, eine OH-Zahl von ca. 125 mgKOH/g und eine Viskosität von 12 dPa.s (originale Lösung bei 23°C, ICI Platte-Kegel-Viskosimeter) auf.

### Vergleichsbeispiel 13

Die Herstellung der Acrylatcopolymerisate V6, V7, E9 und E10 erfolgte jeweils in einem 4-Liter-Edelstahlpolymerisationskessel mit Rührer, Rückflußkühler, einem Monomerenzulauf und einem Initiatorzulauf. Die jeweils angegebenen Komponenten werden eingewogen und dann die Vorlage auf 142°C aufgeheizt.

Der Initiatorzulauf wird 15 Minuten vor dem Monomerenzulauf gestartet; innerhalb von 4 h wird der Monomerenzulauf gleichmäßig zudosiert; innerhalb von 4,75 h wird der Initiatorzulauf gleichmäßig zudosiert. Der Initiatorzulauf endet 30 Minuten nach Ende des Monomerzulaufes. Während der Polymerisation wird die Temperatur im Kessel auf 142°C gehalten. Danach wird noch 2 h nachpolymerisiert. Die so erhaltene Acrylatharzlösung hat einen Festkörper von 79 %. Anschließend wird die Temperatur auf 120°C gesenkt und das Acrylatharz mit 767 Teilen Butylacetat auf 60 % Festkörper angelöst.

### Vorlage:

222 Teile Shellsol® A (handelsübliches aromatisches Kohlenwasserstoffgemisch mit einem Siedbereich zwischen 165 und 185°C der Firma Shell Chemie GmbH)
497 Teile (27,8%) Cardura® E10 (handelsüblicher Glycidylester der Versaticsäure der Firma Shell Chemie GmbH)

### Monomerenzulauf:

326 Teile (18,2 %) Methylmethacrylat
462 Teile (25,8 %) Styrol
359 Teile (20,1 %) Hydroxyethylmethacrylat
145 Teile (8,1 %) Acrylsäure
9 Teile Mercaptoethanol

### Initiatorzulauf:

61 Teile Di-tert.-Butylperoxid
242 Teile Xylol

### Lösemittelmischung zur Festkörpersenkung nach der Polymerisation:

767 Teile Butylacetat

Das so erhaltene Polyacrylatharz V6 weist einen Festkörpergehalt von 60,4% (1h 130°C mit 2 Teilen Xylol), eine Säurezahl von 6,1 mgKOH/g, eine OH-Zahl von 145 mgKOH/g und eine Viskosität von 2,25 dPa.s (50%ig in Butylacetat bei 23°C, ICI Platte-Kegel-Viskosimeter) auf.

### Vergleichsbeispiel 14

Es wird analog zu Vergleichsbeispiel 13 ein Polyacrylatharz E9 hergestellt, allerdings mit dem Unterschied, daß nach Abschluß der Polymerisation bei einer Temperatur von <60°C zusätzlich 3,65 Teile (0,20 %, bezogen auf das Gesamtgewicht der Monomerenmischung, des Reglers und des Initiators) Triisodecylphosphit zugesetzt werden.

Das so erhaltene Polyacrylatharz E9 weist einen Festkörpergehalt von 60,4 % (1h 130°C mit 2 Teilen Xylol), eine Säurezahl von 6,1 mgKOH/g, eine OH-Zahl von ca. 145 mgKOH/g und eine Viskosität von 2,3 dPa.s (50%ig in Butylacetat bei 23°C, ICI Platte-Kegel-Viskosimeter) auf.

### Vergleichsbeipiel 15

Es wird analog Vergleichsbeispiel 13 ein Polyacrylatharz V7 hergestellt, allerdings mit dem Unterschied, daß folgender Initiatorzulauf eingesetzt wird:

### Initiatorzulauf:

61 Teile tert.-Butylcumylperoxid
242 Teile Xylol

Das so erhaltene Polyacrylatharz V7 weist einen Festkörpergehalt von 59,2 % (1h 130°C mit 2 Teilen Xylol), eine Säurezahl von 6,0 mgKOH/g, eine OH-Zahl von ca. 145 mgKOH/g und eine Viskosität von 2,9 dPa.s (50%ig in Butylacetat bei 23°C, ICI Platte-Kegel-Viskosimeter) auf.

### Vergleichsbeispiel 16

Es wird analog zu Vergleichsbeispiel 15 ein Polyacrylatharz E10 hergestellt, allerdings mit dem Unterschied, daß nach Abschluß der Polymerisation bei einer Temperatur von <60°C zusätzlich 3,65 Teile (0,20 %, bezogen auf das Gesamtgewicht der Monomerenmischung, des Reglers und des Initiators) Triisodecylphosphit zugesetzt werden.

Das so erhaltene Polyacrylatharz E10 weist einen Festkörpergehalt von 59,2 % (1h 130°C mit 2 Teilen Xylol), eine Säurezahl von 6,0 mgKOH/g, eine OH-Zahl von ca. 145 mgKOH/g und eine Viskosität von 2,9 dPa.s (50%ig in Butylacetat bei 23°C, ICI Platte-Kegel-Viskosimeter) auf.

Die Zugabeart und Zugabemenge des Triisodecylphodphits ist in Tabelle 1 zusammengefaßt. Die Bestimmung der Farbzahlen der resultuierenden Acrylatharzlösungen ist in Tabelle 2 zusammengefaßt. "V" bedeutet "Vergleichsbeispiel".

**Tabelle 1:**

| Zugabemenge (in Prozent, bezogen auf das Gesamtgewicht der eingesetzten Monomeren, des Reglers und des Initiators) und Zugabeart des Triisodecylphosphits | | | | | |
|---|---|---|---|---|---|
| Beispiel | Gesamtmenge | Kochung | bei <60°C | bei 100°C | bei RT, 24h |
| V1 | - | - | - | - | - |
| V2 | 0,2 | - | 0,2 | - | - |
| V3 | 0,25 | - | 0,25 | - | - |
| V4 | 0,2 | 0,2 | - | - | - |
| Beispiel 1 | 0,25 | 0,2 | 0,05 | - | - |
| V5 | 0,23 | 0,2 | - | 0,03 | - |
| V6 | 0,03 | 0,03 | - | - | - |
| V7 | 0,23 | 0,03 | - | 0,2 | - |
| V8 | - | - | - | - | - |
| V9 | 0,17 | - | 0,17 | - | - |
| V10 | - | - | - | - | - |
| V11 | 0,20 | - | 0,20 | - | - |
| V12 | 0,20 | - | - | - | 0,20 |
| V13 | - | - | - | - | - |
| V14 | 0,20 | - | 0,20 | - | - |
| V15 | - | - | - | - | - |
| V16 | 0,20 | - | 0,20 | - | - |

**Tabelle 2:**

| | | | |
|---|---|---|---|
| Die Messung erfolgt mit dem UV/VIS NIR Spektrometer (Typ CARY 5E) von VARIAN; Küvette: 1cm, Hersteller: Hellma Nr.110-QS, aus Quarzglas "SUPRA SIL" Die Tabelle zeigt die Absorbtionswerte bei den Wellenlinien 390nm, 400nm und 410nm, jeweils mit dem Faktor 1000 multipliziert. Je negativer der Wert, desto größer ist die Aufhellung der Probe. Als Basislinie gilt die jeweils angegebene Probe. | | | |

| Ergebnisse der Farbzahlbestimmung | | | |
|---|---|---|---|
| Beispiel | Absorption bei 390 nm | Absorption bei 400 nm | Absorption bei 410 nm |
| V1 | 0 | 0 | 0 |
| V4 | -9,3 | -9,0 | -8,1 |
| V2 | -13,6 | -11,2 | -9,2 |
| V3 | -12,2 | -10,2 | -8,9 |
| Beispiel 1 | -21,4 | -19,0 | -16,6 |
| | | | |
| V1 | 0 | 0 | 0 |
| V5 | -22,4 | -12,2 | -8,1 |
| | | | |
| V6 | 0 | 0 | 0 |
| V7 | -14,5 | -8,7 | -6,0 |
| | | | |
| V8 | 0 | 0 | 0 |
| V9 | -3,4 | -3,2 | -3,1 |
| | | | |
| V10 | 0 | 0 | 0 |
| V11 | -5,8 | -4,9 | -4,8 |
| V12 | -4,8 | -4,7 | -4,7 |
| | | | |
| V13 | 0 | 0 | 0 |
| V14 | -7,3 | -5,8 | -5,0 |
| | | | |
| V15 | 0 | 0 | 0 |
| V16 | -3,6 | -2,8 | -2,4 |

### Zusammenfassung der Prüfergebnisse

1.) Der Vergleich des Vergleichsbeispiels V1 mit dem Vergleichsbeispiel V4 zeigte eine Verbesserung der Farbzahl bei Zugabe von Triisodecylphosphit in der Kochung. Der Effekt verstärkt sich, wenn Triisodecylphosphit nicht während der Kochung, sondern nachträglich nach dem Abkühlen auf Raumtemperatur oder bei erhöhter Temperatur zugegeben wird, wie der Vergleich der Vergleichsbeispiel 2 und 3 mit dem Vergleichsbeispiel 4 zeigt.
2.) Eine weitere deutliche Verbesserung der Farbzahl erhält man durch Aufteilen der Menge Triisodecylphosphit in einen Teil, der zur Kochung zugegeben wird und einen Teil, der nach Abschluß der Polymerisation nach Abkühlen auf Temperaturen von unter 115°C zugegeben wird. So zeigt der Vergleich des Beispiels 1 mit dem Vergleichsbeispiel 3 eine deutliche Verbesserung der Farbzahl bei Zugabe eines Teils des Triisodecylphoshits zur Kochung. Der Vergleich des Vergleichsbeispiels 4 mit den Vergleichsbeispielen 5 und 3 zeigt, daß dieses Verfahren auch bei Zugabe des Triisodecylphosphits bei 100°C eine deutliche Verbesserung der Farbzahl ergibt. Der Vergleich des Vergleichsbeispiels 6 mit dem Vergleichsbeispiel 7 und des Vergleichsbeispiels 4 mit dem Vergleichsbeispiel 5 zeigt, daß vorteilhafterweise eine gewisse Menge Triisodecylphosphit zur Kochung zugegeben werden kann.
3.) Der Vergleich des Vergleichsbeispiels 10 mit den Vergleichsbeispielen 11 und 12 zeigt eine leichte Verbesserung der Farbzahl bei Zugabe des Triisodecylphosphits nach Abschluß der Polymerisation im Vergleich zur Zugabe des Triisodecylphosphits 24 h nach Beendigung der Polymerisation.
4.) Die Vergleichsbeispiele 8 und 9 sowie die Vergleichsbeispiele 13 und 15 und die Vergleichsbeispiele 14 und 16 zeigen die Übertragung des Verfahrens auf andere Initiatoren und Monomerzusammensetzungen.

### Vergleichsbeispiele 17 und 18: Herstellung von Klarlacken

### 1. Herstellung einer Härterlösung

Aus den nachfolgend angegebenen Komponenten wird durch Mischen eine Härterlösung hergestellt:

| | |
|---|---|
| Butylacetat 98% | 40,5 Teile |
| Xylol | 4,0 Teile |
| Butylglykolacetat | 6,0 Teile |
| Katalysatorlösung | 1,5 Teile |
| Desmodur® Z 4370¹⁾ | 15,0 Teile |
| Desmodur® N 3390²⁾ | 33,0 Teile |
| Festkörper (Gew.%) | 42,2 Teile |

| | |
|---|---|
| ¹⁾ Handelsübliches Polyisocyanat der Firma Bayer AG auf Basis Isophorondiisocyanat mit einem Festkörpergehalt von 70 % und einem NCO-Gehalt von 11 %. | |
| ²⁾ Handelsübliches Polyisocyanat der Firma Bayer AG auf Basis eines Hexamethylendiisocyanattrimerisates mit einer mittleren Funktionalität zwischen 3 und 4 und einem Uretdiongruppengehalt zwischen 0 und 3 Gew.-% sowie einem Festkörpergehalt von 90 % und einem Isocyanatgehalt von 19,5 %. | |

### 2. Herstellung eines Einstellzusatzes

Aus den nachfolgend angegebenen Komponenten wird durch Mischen ein Einstellzusatz hergestellt:

| | |
|---|---|
| Xylol | 20,0 Teile |
| Solventnaphta® | 15,0 Teile |
| Benzin 135/180 | 10,0 Teile |
| Butylgykolacetat | 5,0 Teile |
| Butylacetat (98/100) | 50,0 Teile |

### 3. Herstellung einer Katalysatorlösung

1,0 Teile Dibutylzinndilaurat werden mit 99,0 Teilen Butylacetat 98/100 gemischt.

### 4. Herstellung einer Verlaufsmittellösung

5,0 Teile eines handelsüblichen Verlaufsmittels auf Basis eines polyethermodifizierten Methylpolysiloxans (Handelsprodukt Baysilone® OL 17 der Bayer AG), 45 Teile Butylacetat 98/100 und 55,0 Teile Xylol werden gemischt.

### 5. Herstellung der Klarlacklösungen E1 und V1 (Vergleichsbeispiele 17 und 18)

Aus den in Tabelle 3 angegebenen Komponenten werden die Klarlacklösungen durch Vermischen hergestellt.

### 6. Herstellung der transparenten Decklacke E1 und V1 (Vergleichsbeispiele 17 und 18)

Die transparenten Decklacke werden dadurch hergestellt, daß jeweils 100 Volumenteile der Klarlacklösung E1 bzw. V1 mit 50 Volumenteilen der obenbeschriebenen Härterlösung und 10 Volumenteilen des obenbeschriebenen Einstellzusatzes gemischt werden.

Der so erhaltene Lack wird dann auf phosphatierte und beschichtete Stahlbleche appliziert. Die phosphatierten Stahlbleche werden hierzu mit einem handelsüblichen konventionellen Füller (Handelsprodukt Glasurit Grundfüller EP 801-1552 der Firma Glasurit GmbH, Münster, mit einem epoxifunktionellen Bindemittel und einem aminofunktionellen Härter) mittels Spritzauftrag beschichtet (Trockenfilmschichtdicke ca. 40 bis 60 µm), 45 min bei 80°C und 16 h bei Raumtemperatur getrocknet und mit Schleifpapier P800 und Excenterschleifer naß geschliffen. Anschließend wird ein Basislack aus einer Mischung aus 80 Teilen eines handelsüblichen konventionellen Metallic-Basislackes (Handelsprodukt Basislack AE 54M 99/9 Basisfarbe Aluminium superfein der Firma Glasurit GmbH, Münster) auf Basis eines hydroxylgruppenhaltigen Polyesters, Celluloseacetobutyrat, Wachs und eines Melaminharzes und 20 Teilen eines weiteren handelsüblichen konventionellen Basislackes (Handelsprodukt Basislack AE 54M 552 Basisfarbe Helioblau der Firma Glasurit GmbH, Münster) auf Basis eines hydroxylgruppenhaltigen Polyesters, Celluloseacetobutyrat, Wachs und eines Melaminharzes aufgebracht, indem zunächst ein Spritzgang aufgetragen wird und nach einer Zwischenablüftzeit von 5 min ein zweiter Spritzgang aufgebracht wird (Spritzdruck jeweils 4 - 5 bar). Die Trockenfilmschichtdicke des Basislackes beträgt ca. 20 µm. Nach einer Ablüftzeit von 30 min. wird der Klarlack appliziert, indem zunächst ein Spritzgang aufgetragen wird und nach einer Zwischenablüftzeit von 3 min ein zweiter Spritzgang aufgebracht wird (Spritzdruck jeweils 4 - 5 bar). Die Tafeln werden dann je nach durchgeführter Prüfung unter verschiedenen Bedingungen getrocknet. Die Trockenfilmschichtdicke des Klarlackes beträgt ca. 50 - 80 µm.

Die Ergebnisse der Prüfung der resultierenden Beschichtungen sind in der Tabelle 4 dargestellt.

**Tabelle 3:**

| Zusammensetzung der Klarlacklösungen in Teilen | | |
|---|---|---|
| Klarlack | V1 Vergleichsbeispiel 18 | E1Vergleichsbeispiel 17 |
| Acrylat V1¹⁾ | 81,0 | - |
| Acrylat E1¹⁾ | - | 81,0 |
| Tinuvin® 292²⁾ | 1,2 | 1,2 |
| Tinuvin® 1130³⁾ | 1, 2 | 1,2 |
| Verlaufsmittel⁵⁾ | 3,7 | 3,7 |
| Katalysator⁴⁾ | 1,8 | 1,8 |
| BGA⁶⁾ | 1,2 | 1,2 |
| Xylol | 5,0 | 5,0 |
| BAC⁷⁾ | 4,9 | 4,9 |

| | | |
|---|---|---|
| Erläuterungen zu Tabelle 3 ¹⁾ in Tabelle 1 beschriebene Acrylatharzlösung E1 und V1 (Vergleichsbeispiele 1 und 2) | | |
| ²⁾ Tinuvin®292 der Firma Ciba Geigy, handelsübliches Lichtschutzmittel auf Basis eines sterisch gehinderten Amins (HALS) | | |
| ³⁾ Tinuvin®1130 der Firma Ciba Geigy, handeslübliches Lichtschutzmittel auf Basis Benztriazol | | |
| ⁴⁾ Unter Punkt 3. beschriebene Katalysatorlösung | | |
| ⁵⁾ Unter Punkt 4. beschriebene Verlaufsmittellösung | | |
| ⁶⁾ Butylglykolacetat | | |
| ⁷⁾ Butylacetat 98 %ig | | |

**Tabelle 4:**

| Prüfergebnisse der Beschichtungsmittel/Beschichtungen | | |
|---|---|---|
| | V1 Vergleichsbeispiel 18 | E1 Vergleichsbeispiel 17 |
| Vergilbung | v. | s.v. |
| Staubfrei | 2h30min | 2h20min |
| Klebfrei | 4h25min | 4h45min |
| Abklebetest | l.m. | l.m. |
| Volvocracktest | g0m0 | g0m0 |

### Erläuterungen zu Tabelle 4

Die in der Tabelle 4 angeführten Prüfungen werden folgendermaßen durchgeführt:

### Vergilbung:

Visuelle Beurteilung der Vergilbung nach Lagerung (4 Wochen bei 50°C):
v = vergilbt
s.v. = sehr leicht vergilbt

### Staubfreiheit:

Ca. 15 Minuten nach dem Aufspritzen des Lackes wird die Tafel an einer Ecke mit einer kleinen Probe Seesand (3 - 4 g) bestreut. Die Tafel wird dann aus einer Höhe von 30 cm mit der Kante aufgestoßen (freier Fall). Staubfreiheit ist erreicht, wenn keine Sandanhaftung vorliegt. Die Prüfung wird nach jeweils 15 Minuten wiederholt, kurz vor Erreichen der Staubfreiheit wird das Wiederholungsintervall auf 5 Minuten verkürzt.

### Klebfreiheit:

Ca. 20 Minuten nach Erreichen der Staubfreiheit wird die lackierte Tafel mit einem ca. 3cm² Blättchen Papier belegt. Auf dieses Papier wird eine kleine Platte aus Hartkunstoff gelegt, auf das dann ein Gewicht von 100g aufgelegt wird. Nach genau 1 Minute wird wie beim Test auf Staubfreiheit geprüft, ob das Papier noch anhaftet. Die Prüfung wird nach jeweils 15 Minuten wiederholt, kurz vor Erreichen der Klebfreiheit wird das Wiederholungsintervall auf 5 Minuten verkürzt

### Abklebetest:

Nach 20 Minuten Ablüften bei Basislacken bzw. 24h Lagerung der Tafeln bei Raumtemperatur bei chemisch gehärteten Systemen wird ein Streifen Tesakrepp 4330 locker auf die Testtafel aufgeklebt und anschließend durch zweimaliges Überrollen mit einem Metallzylinder (ca.7 cm lang, ca. 6 cm breit, Gewicht ca. 1.5 kg) angedrückt. Nach 1 Stunde wird das Band entfernt und nach Stärke der Markierung beurteilt.

### Beurteilung:

| | |
|---|---|
| in Ordnung | i.o., |
| leicht markiert | l.m., |
| markiert | m, |
| stark markiert | st.m. |

### Volvo Crack Test:

Prüfbedingungen 1 Cyclus:
4h bei 50 °C im Ofen
2h bei 35 °C und 95-100 % rel. Luftfeuchte
2h bei 35 °C und 95-100 % rel. Luftfeuchte und 21 Schwefeldioxid
16h bei -30 °C im Tiefkühlschrank
Tafel mit Wasser waschen und trocknen
Auswertung:
   Blasengrad nach DIN 53209
   Risse ASTM D660

## Patentansprüche

1. Verfahren zur Herstellung eines organisches Lösungsmittel enthaltenden Überzugsmittels auf der Basis von Vernetzungsmitteln und einer Lösung eines Polyacrylatharzes (A) in mindestens einem organischen Lösemittel mit einem Gehalt an mindestens einem Phosphit, **dadurch gekennzeichnet, dass** die Lösung des Acrylatharzes (A) 0,05 bis 1,0 Gew.-%, bezogen auf den Festkörpergehalt der Acrylatharzlösung, mindestens eines organischen Phosphits der Formel (1) 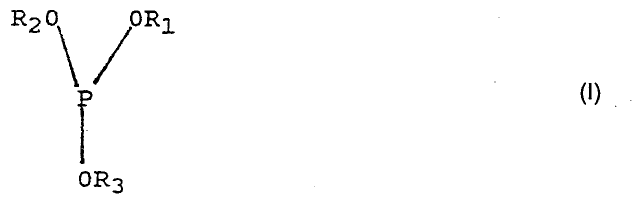 in der R₁, R₂ und R₃ gleiche oder verschiedene gesättigte, aliphatische, lineare oder verzweigte Reste mit 1 bis 18 C-Atomen, Arylreste mit 6 bis 10 C-Atomen oder Arylalkylreste mit 7 bis 20 C-Atomen sind und R₁ zusätzlich noch H bedeuten kann,
oder der Formel (II), (III) oder (IV) 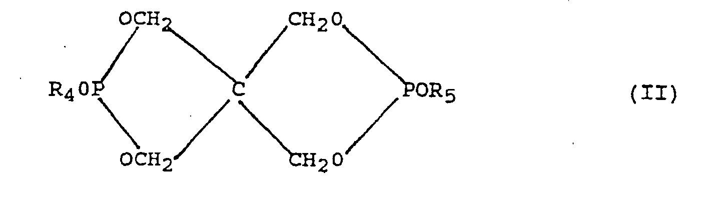 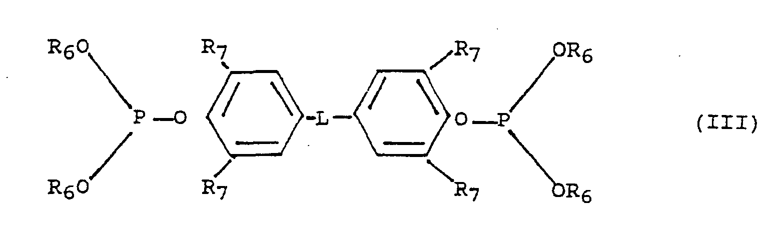 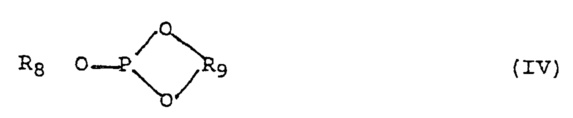 in der R₄ und R₅ gleiche oder verschiedene Aklylreste mit 1 bis 30 C-Atomen, insbesondere Lauryl-, Palmitin- und Stearylgruppen sowie Octadecylreste, Cycloalkylreste mit 5 bis 14 C-Atomen oder Arylreste mit 6 bis 20 C-Atomen, die auch Alkylsubstituenten enthalten können,
R₆ ein substituierter oder unsubstituierter Arylrest mit 6 bis 14 C-Atomen,
R₇ H oder ein Alkylrest mit 1 bis 4 C-Atomen und L Sauerstoff, ein Alkylidenrest mit 1 bis 6 C-Atomen oder eine Einfachbindung,
R₈ ein Alkylenrest mit 2 bis 5 C-Atomen oder ein zweibindiger Rest eines C₆-C₃₀-Ary1 ringsystems und
R₉ die gleiche Bedeutung wie R₄ hat, mit der Maßgabe, dass von den möglichen Resten R₈ und R₉ jeweils mindestens ein C-Atom, das mit dem Sauerstoff der phosphorigen Säure unmittelbar verbunden ist, Bestandteil eines aromatischen Ringes ist,
enthält und dass die Lösung des Polyacrylatharzes (A) hergestellt wird, indem 80 bis 30 Gew.-% der Gesamtmenge des organischen Phosphits bei der Polymerisationsreaktion und die Restmenge des Phosphits nach Abschluß der Polymerisation bei einer Temperatur, die unterhalb der Polymerisationstemperatur liegt, zugegeben werden.

2. Verfahren nach Anspruch 1, **dadurch gekennzeichnet, dass** die Lösung 0,15 bis 0,5 Gew.-%, bezogen auf den Festkörpergehalt der Acrylatharzlösung, mindestens eines Phosphits enthält.

3. Verfahren nach einem der Ansprüche 1 oder 2, **dadurch gekennzeichnet, dass** sie Triisodecylphosphit enthält.

4. Verfahren nach einem der Ansprüche 1 bis 3, **dadurch gekennzeichnet, dass** das Phosphit der Polyacrylatharzlösung bei einer um mindestens 20°C, bevorzugt um mindestens 25°C, unter der Polymerisationstemperatur liegenden Temperatur zugegeben wird.

5. Verfahren nach einem der Ansprüche 1 bis 4, **dadurch gekennzeichnet, dass** das Polyacrylatharz (A) ein zahlenmittleres Molekulargewicht von maximal 10.000, bevorzugt von 1.000 bis 5.000, aufweist und/oder das Acrylatharz Hydroxyl- und/oder Carboxylgruppen oder Epoxidgruppen oder Amidgruppen als vernetzende Gruppen aufweist.

6. Verfahren nach Anspruch 5, **dadurch gekennzeichnet, dass** das hydroxylgruppenhaltige Polyacrylatharz (A) eine OH-Zahl von 20 bis 360 mg KOH/g, bevorzugt 40 bis 200 mg KOH/g und eine Säurezahl von 0 bis 80 mg KOH/g, bevorzugt 0 bis 50 mg KOH/g und das carboxylgruppenhaltige Polyacrylatharz (A) eine Säurezahl von 40 bis 140 mg KOH/g, bevorzugt 40 bis 100 mg KOH/g und eine OH-Zahl von 0 bis 200 mg KOH/g, bevorzugt 0 bis 100 mg KOH/g, aufweist.

7. Verfahren nach Anspruch 5 oder 6, **dadurch gekennzeichnet, dass** das Polyacrylatharz (A) Polysiloxanmakromonomere einpolymerisiert enthält.

8. Verfahren mit nach Anspruch 7, **dadurch gekennzeichnet, dass** das Polyacrylatharz (A) bei niedrigen Temperaturen, insbesondere bei Temperaturen unterhalb von 120°C, gehärtet wird.

9. Verfahren zur Herstellung einer mehrschichtigen, schützenden und/oder dekorativen Beschichtung, bei dem
1. ein pigmentierter Basislack auf die Substratoberfläche aufgebracht wird,
2. aus dem in Stufe (1) aufgebrachten Basislack ein Polymerfilm gebildet wird,
3. auf die so erhaltene Basisschicht ein transparenter Decklack aufgebracht wird und anschließend
4. Basislackschicht und Decklackschicht zusammen gehärtet werden,
**dadurch gekennzeichnet, dass** als Decklack ein nach einem Verfahren gemäß Anspruch 7 oder 8 hergestelltes Überzugsmittel eingesetzt wird.

## Revendications

1. Process for preparing a coating composition comprising organic solvent and based on a crosslinking agents and a solution of a polyacrylate resin (A) in one or more organic solvents, containing one or more phosphites, **characterized in that** the solution of the acrylate resin (A) contains from 0.05 to 1.0% by weight, based on the solids content of the acrylate resin solution, of one or more organic phosphites of the formula (I) 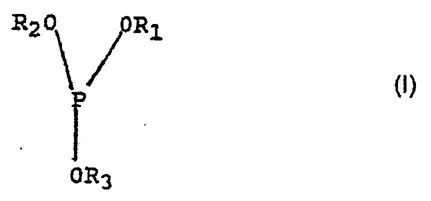 in which R₁, R₂ and R₃ are identical or different saturated, aliphatic, linear or branched radicals having 1 to 18 carbon atoms, aryl radicals having 6 to 10 carbon atoms or aralkyl radicals having 7 to 20 carbon atoms and R₁ may additionally denote H,
or of the formula (II) , (III) or (IV) 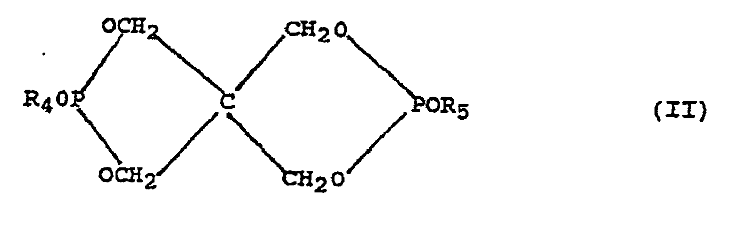 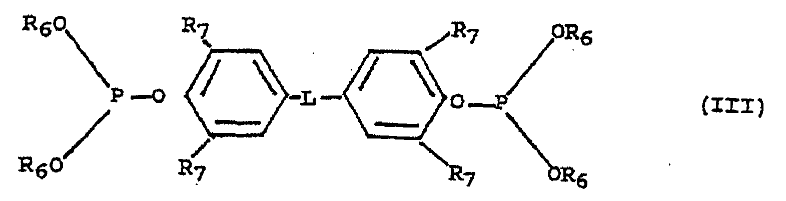 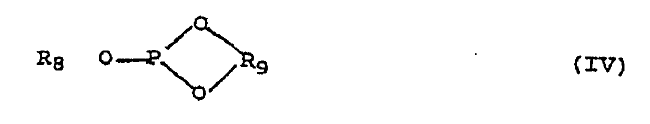 in which R₄ and R₅ are identical or different alkyl radicals having 1 to 30 carbon atoms, especially lauryl, palmitic and stearyl groups, and octadecyl radicals, cycloalkyl radicals having 5 to 14 carbon atoms or aryl radicals having 6 to 20 carbon atoms, which may also contain alkyl substituents, R₆ is a substituted or unsubstituted aryl radical having 6 to 14 carbon atoms, R₇ is H or an alkyl radical having 1 to 4 carbon atoms and L is oxygen, an alkylidene radical having 1 to 6 carbon atoms or a single bond, R₈ is an alkylene radical having 2 to 5 carbon atoms or a divalent radical of a C₆-C₃₀-aryl ring system and R₉ has the same meaning as R₄, with the proviso that, of the possible radicals R₈ and R₉, in each case at least one carbon atom connected directly to the oxygen of the phosphorous acid is part of an aromatic ring,
and **in that** the solution of the polyacrylate resin (A) is prepared by from 80 to 30% by weight of the overall quantity of the organic phosphite being added in the polymerization reaction, and the remaining quantity of the phosphite being added after the polymerization is over, at a temperature below the polymerization temperature.

2. Process according to claim 1, **characterized in that** the solution contains from 0.15 to 0.5% weight, based on the solids content of the acrylate resin solution, of one or more phosphites.

3. Process according to either of claims 1 or 2, **characterized in that** it contains triisodecyl phosphite.

4. Process according to one of claims 1 to 3, **characterized in that** the phosphite is added to the polyacrylate resin solution at a temperature which is at least 20°C, preferably at least 25°C, below the polymerization temperature.

5. Process according to one of claims 1 to 4, **characterized in that** the polyacrylate resin (A) has a number-average molecular weight of not more than 10,000, preferably from 1,000 to 5,000, and/or the acrylate resin contains hydroxyl and/or carboxyl groups and epoxide groups or amide groups as crosslinking groups.

6. Process according to claim 5, **characterized in that** the hydroxyl-containing polyacrylate resin (A) has an OH number of from 20 to 360 mg of KOH/g, preferably from 40 to 200 mg of KOH/g and an acid number of from 0 to 80 mg of KOH/g, preferably from 0 to 50 mg of KOH/g, and the carboxyl-containing polyacrylate resin (A) has an acid number of from 40 to 140 mg of KOH/g, preferably from 40 to 100 mg of KOH/g and an OH number of from 0 to 200 mg of KOH/g, preferably from 0 to 100 mg of KOH/g.

7. Process according to claim 5 or 6, **characterized in that** the polyacrylate resin (A) contains polysiloxane macromonomers in copolymerized form.

8. Process according to claim 7, **characterized in that** the polyacrylate resin (A) is cured at low temperatures, in particular temperatures below 120°C.

9. Process for producing a multilayer, protective and/or decorative coating, in which
1. a pigmented basecoat is applied to the substrate surface,
2. a polymer film is formed from the basecoat applied in step (1),
3. a transparent topcoat is applied to the basecoat thus obtained, and subsequently
4. basecoat and topcoat are cured together,
**characterized in that** the topcoat employed is a coating composition prepared by a process according to claim 7 or 8.

## Claims

1. Procédé pour la préparation d'une composition de revêtement contenant un solvant organique, à base des agents de réticulation et d'une solution d'une résine polyacrylate (A) dans au moins un solvant organique ayant une teneur en au moins un phosphite, **caractérisée en ce que** la solution de la résine acrylate (A) contient de 0,05 à 1,0 % en poids, par rapport à la teneur en matière solide de la solution de résine acrylate, d'au moins un phosphite organique de formule (I) 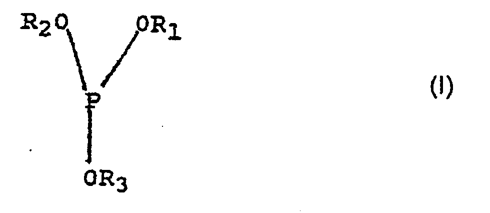 dans laquelle R₁, R₂ et R₃ sont des radicaux aliphatiques saturés, linéaires ou ramifiés, ayant de 1 à 18 atomes de carbone, des radicaux aryle ayant de 6 à 10 atomes de carbone ou des radicaux aralkyle ayant de 7 à 20 atomes de carbone, identiques ou différents, et R₁ peut en outre représenter encore H,
ou de formule (II), (III) ou (IV) 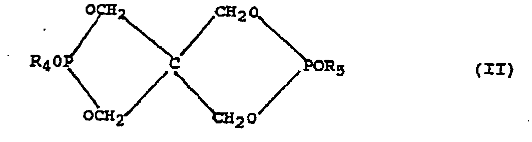 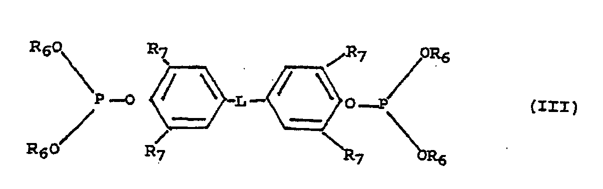 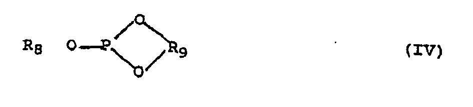 dans laquelle R₄ et R₅ représentent des radicaux alkyle ayant de 1 à 30 atomes de carbone, en particulier des groupes lauryle, palmityle et stéaryle, ainsi que des radicaux octadécyle, des radicaux cycloalkyle ayant de 5 à 14 atomes de carbone ou des radicaux aryle ayant de 6 à 20 atomes de carbone, qui peuvent également porter des substituants alkyle, identiques ou différents,
R₆ représente un radical aryle substitué ou non substitué ayant de 6 à 14 atomes de carbone, R₇ représente H ou un radical alkyle ayant de 1 à 4 atomes de carbone, et L représente un atome d'oxygène, un radical alkylidène ayant de 1 à 6 atomes de carbone ou une liaison simple,
R₈ représente un radical alkylène ayant de 2 à 5 atomes de carbone ou un radical à deux liaisons d'un système cyclique aryle en C₆-C₃₀, et
R₉ a la même signification que R₄, étant entendu que parmi les radicaux possibles R₈ et R₉, chaque fois au moins un atome de carbone qui est directement lié à l'atome d'oxygène de l'acide phosphoreux fait partie d'un cycle aromatique,
et **en ce que** la solution de la résine polyacrylate A est préparée par addition de 80 à 30% en poids de la quantité totale du phosphite organique dans la réaction de polymérisation, et de la quantité restante du phosphite après la fin de la polymérisation, à une température inférieure à la température de polymérisation.

2. Procédé selon la revendication 1, **caractérisée en ce que** la solution contient de 0,15 à 0,5 % en poids, par rapport à la teneur en matière solide de la solution de résine acrylate, d'au moins un phosphite.

3. Procédé selon la revendication 1 ou 2, **caractérisée en ce qu'**elle contient du phosphite de triisodécyle.

4. Procédé selon l'une quelconque des revendications 1 à 3, **caractérisée en ce que** le phosphite de la solution de résine polyacrylate est ajouté à une température inférieure d'au moins 20°C, de préférence d'au moins 25°C, à la température de polymérisation.

5. Procédé selon l'une quelconque des revendications 1 à 4, **caractérisée en ce que** la résine polyacrylate (A) présente une masse moléculaire moyenne en nombre d'au maximum 10 000, de préférence de 1 000 à 5 000, et/ou la résine acrylate comporte des groupes hydroxy et/ou carboxy ou des groupes époxy ou des groupes amido en tant que groupes réticulants.

6. Composition de revêtement selon la revendication 5, **caractérisée en ce que** la résine polyacrylate (A) contenant des groupes hydroxy présente un indice de groupes OH de 20 à 360 mg de KOH/g, de préférence de 40 à 200 mg de KOH/g, et un indice d'acide de 0 à 80 mg de KOH/g, de préférence de 0 à 50 mg de KOH/g, et la résine polyacrylate (A) contenant des groupes carboxy présente un indice d'acide de 40 à 140 mg de KOH/g, de préférence de 40 à 100 mg de KOH/g et un indice de groupes OH de 0 à 200 mg de KOH/g, de préférence de 0 à 100 mg de KOH/g.

7. Procédé selon la revendication 5 ou 6, **caractérisée en ce que** la résine polyacrylate (A) contient des macromonomères polysiloxane copolymérisés.

8. Procédé selon la revendication 7, **caractérisée en ce que** la résine polyacrylate (A) est durcie à basses températures, en particulier à des températures inférieures à 120°C.

9. Procédé pour la production d'un revêtement multi-couche, protecteur et/ou décoratif, dans lequel
1. on applique une peinture de base pigmentée sur la surface du subjectile,
2. un feuil de polymère est formé à partir de la peinture de base appliquée dans l'étape (1)
3. on applique un vernis transparent de finition sur la couche de base ainsi obtenue, et ensuite
4. couche de peinture de base et couche de vernis de finition sont durcies ensemble,
**caractérisé en ce qu'**on utilise comme vernis de finition une composition de revêtement préparée selon le procédé selon la revendication 7 ou 8.
